(19) Europäisches Patentamt / European Patent Office / Office européen des brevets

(11) **EP 4 025 427 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **19797658.2**

(22) Anmeldetag: **30.10.2019**

(51) Internationale Patentklassifikation (IPC):
**B33Y 70/00** $^{(2020.01)}$

(52) Gemeinsame Patentklassifikation (CPC):
(C-Sets verfügbar)
**B33Y 70/00; C08K 3/041; C08L 83/04;**
C08G 77/12; C08G 77/20          (Forts.)

(86) Internationale Anmeldenummer:
**PCT/EP2019/079695**

(87) Internationale Veröffentlichungsnummer:
**WO 2021/083514 (06.05.2021 Gazette 2021/18)**

(54) **FORMULIERUNG VON CNT-HALTIGEN SILOXANEN ENTHALTEND KIESELSÄURE**

FORMULATION OF CNT-CONTAINING SILOXANES CONTAINING SILICIC ACID

FORMULATION DE SILOXANES CONTENANT DES NTC CONTENANT DE L'ACIDE SILICIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.07.2022   Patentblatt 2022/28**

(73) Patentinhaber: **Wacker Chemie AG**
**81671 München (DE)**

(72) Erfinder:
• **GOTTSCHALK-GAUDIG, Torsten**
**84561 Mehring (DE)**
• **KIRSCHNER, Claudia**
**94166 Stubenberg (DE)**

(74) Vertreter: **Mai, Marit et al**
**Wacker Chemie AG**
**Gisela-Stein-Straße 1**
**81671 München (DE)**

(56) Entgegenhaltungen:
**WO-A1-2017/143961      CN-A- 108 641 370**

**(Forts. nächste Seite)**

(52) Gemeinsame Patentklassifikation (CPC): (Forts.)

C-Sets
**C08K 3/041, C08L 83/04;**
**C08L 83/04, C08L 83/00, C08K 3/041, C08K 3/36**

**Beschreibung**

Die vorliegende Erfindung offenbart Formulierungen von CNT-haltigen Siloxanen. Die Erfindung offenbart ferner ein Verfahren zur Herstellung dieser Formulierungen sowie deren Anwendung als formgebendes Material beim 3-D-Druck oder Siebdruck.

Elektrisch leitfähige Silicon-Elastomere sind bekannt und kommerziell erhältlich, wie z.B. die Produkte ELASTOSIL® LR 3162 A/B und POWERSIL® 466 A/B der Wacker Chemie AG. Diese enthalten üblicherweise Leitfähigkeitsruße als leitfähigkeitsgebende Komponenten. Die Ruße werden in einer Menge von ca. 5-10 Gew.-% zugesetzt und erhöhen die Viskosität der Mischung soweit, dass übliche Formgebungsverfahren wie Spritzguss und insbesondere 3D-Druck nicht mehr möglich sind.

Durch den Einsatz anisotroper Füllstoffe, wie z.B. MWCNTs (MWCNT = multi-walled carbon nanotubes), kann die Menge des benötigten Leitfähigkeitsfüllstoffs auf ca. 0,5-3 Gew.-% gesenkt werden, wodurch fließfähige Massen erhalten werden. Auch MWCNT-haltige Silicon-Elastomere sind bekannt ((a) C.-L. Wu, H.-C. Lin, C.-H. Huang, M.-C. Yip, W. Fang, MRS Online Proceedings Library 2007, 1056; (b) S. S. Hassouneh, L. Yu, A. L. Skov, A. E. Daugaard, Journal of Applied Polymer Science 2017, 134, n/a-n/a; (c) A. Behrens, K. Foremny, T. Doll, physica status solidi (a) 2018, 215, 1700873; und (d) C. X. Liu, J. W. Choi, IEEE Transactions on Nanotechnology 2010, 9, 590-595). Üblicherweise handelt es sich dabei um hochtemperatur-vernetzende Silicone-Elastomere mit hoher Viskosität > 1.000.000 mPa*s. Die Herstellung erfolgt mittels Knetern und/oder Walzenstühlen. Diese Verfahren sind zeit- und personalaufwändig und haben zudem den Nachteil, dass die Leitfähigkeit der Mischungen schnell einbricht, da vermutlich die CNTs (CNTs = carbon nanotubes) teilweise mechanisch zerstört werden.

Auch wenn CNT-Partikel nach der Einmischung heterogen verteilt bleiben, kann die elektrische Leitfähigkeit stark beeinträchtigt werden. Da CNTs durch van-der-Waals-Kräfte stark verknäult sind, und CNTs häufig in großen Bündeln oder dichten Agglomeraten vorliegen, kann es zu unkontrollierten elektronischen Veränderungen kommen. Eine gleichmäßige Einmischung (Dispergierung) der CNTs ist daher die wesentliche Herausforderung bei der Herstellung von CNT-haltigen Siloxanen.

Es sind bereits viele Verfahren zur Einmischung von CNTs in Siloxane oder Silicon-Kompositmaterialien bekannt.

Die CN107298859 offenbart die Herstellung von flexiblen CNT-haltigen Siloxanen mittels Planeten-Dispergier-Vakuum-Mischer für 90 Minuten. Es werden lediglich die Brucheigenschaften und die Zugdehnung bestimmt. Es werden keine Angaben zum Leistungseintrag gemacht, auch der Widerstand der Materialien ist nicht bekannt.

CN106046739A offenbart elektrisch leitfähige Kompositmaterialien, die unter anderem Silicone (gamma-mercaptopropyltrimethoxysilan, Phenylsiliconöl) und CNTs enthalten. Sie werden mittels Hochgeschwindigkeitsmischer gemischt. Es werden Volumenwiderstände zwischen 1,03 $\Omega$*cm und 1,13 $\Omega$*cm erreicht. Es werden jedoch keine Informationen zu Leistungseintrag oder Messmethode des Widerstands gegeben, wodurch eine Vergleichbarkeit der Werte erschwert wird.

CN107722631A offenbart eine Wärmeleitpaste enthaltend unter anderem Siliconöl, Zinkoxid und ein Komposit aus CNTs und mikroexpandiertem Graphit. Die Mischung wird in einem Kneter hergestellt. Die Verwendung von Knetern ist häufig von Nachteil, da sie nur bei hochviskosen Siloxanen eingesetzt werden können. Zudem könnten die CNTs durch die mechanische Belastung zerstört werden, so dass die Leitfähigkeit beeinträchtigt wird.

CN 109082124A offenbart elektromagnetische Abschirmmaterialien aus lichthärtbaren Silicon-Kompositmaterialien mit mehrarmigen CNTs. Bei der Herstellung werden die CNTs zunächst in THF durch Ultraschall dispergiert bevor Silicon und Vernetzer bei 800-1000 rpm eingemischt werden. Anschließend erfolgt eine weitere Ultraschallbehandlung für 45-60 Minuten. Ultraschallbehandlungen sind ebenfalls häufig von Nachteil, da die mechanische Belastung sehr hoch ist und CNTs dadurch zerstört werden können. Weiterhin ist für dieses Verfahren ein Lösungsmittel notwendig, um eine gleichmäßige Dispergierung zu erreichen. Dadurch ist ein zusätzlicher Arbeitsschritt erforderlich, um das Lösungsmittel wieder zu entfernen. Lösungsmittelrückstände können im Produkt zu Blasenbildung führen und die mechanischen Eigenschaften beeinträchtigen.

CN 108688252A offenbart als Komponente eines Films eines schockempfindlichen Aktuators eine Mischung von CNTs in Polydimethylsiloxan (PDMS). Zur Herstellung dieser Mischung wird PDMS zunächst in einem Lösungsmittel (n-Hexan oder Cyclohexan) gelöst. Anschließend werden die CNTs bei Raumtemperatur bei 2000-2500 rpm für 5-8 Stunden eingemischt. Danach wird noch ein Vernetzer zugegeben (Dow Corning Mischung 184). Von dieser Mischung werden keine elektrischen Eigenschaften ermittelt. Bei diesem Verfahren ist ebenfalls das Lösungsmittel nachteilig, zudem werden keine Information zum Mischer und zum Leistungseintrag gegeben.

CN 108504106A offenbart ein leitfähiges Silicon-Kompositmaterial mit CNTs. Bei der Herstellung werden die CNTs zunächst mit THF unter Rühren gemischt und anschließend durch Ultraschall dispergiert. Anschließend wird das Silicon zugegeben, die Mischung wird bei Raumtemperatur für 90 Minuten gerührt und einer Ultraschallbehandlung unterzogen. Danach wird noch ein Vernetzer zugegeben. Es werden bei 100 Hz dielektrische Konstanten von 250-980 ermittelt. Dieses Verfahren weist ebenfalls die zuvor beschriebenen Nachteile von Ultraschallbehandlungen und Lösungsmitteleinsatz auf.

CN 107383880A offenbart flexible, leitfähige CNT-haltige Silicone. Zur Herstellung wird zunächst ein teilvernetztes Silicon (PDMS) hergestellt und in Hexan gelöst. Anschließend werden CNTs zugegeben und durch Ultraschall im Silicon dispergiert (Behandlung mit Unterbrechungen: 5 Minuten US, 3 Minuten Pause, insgesamt 60 Minuten - es wird kein vorteilhafter Effekt der Pause beschrieben, vermutlich ist die hohe Wärmeentwicklung oder mechanische Belastung der Sonotrode der Grund für die Pause). Nachdem das Hexan entfernt wurde, wird erneut Vernetzer zugegeben, um das Endprodukt zu erhalten. Es werden bei Raumtemperatur Widerstände von 0,8-39 $\Omega$*cm erreicht. Dieses Verfahren weist ebenfalls die zuvor beschriebenen Nachteile von Ultraschallbehandlungen und Lösungsmitteleinsatz auf.

Das Dokument WO 2017/143961 A1 betrifft Siloxanzusammensetzungen, die für den 3D-Druck verwendet werden können und ein Vinylsiloxan, ein weiteres Siloxan, das reaktive Wasserstoffatome aufweist, eine hydrophobe, oberflächenmodifizierte Kieselsäure und möglicherweise auch CNTs enthalten.

Von niedrigviskosen, elektrisch leitfähigen Siloxanformulierungen ist bekannt, dass diese bei Anwendung eines typischen Formgebungsverfahrens, wie z.B. Spritzguss, Jetting, Lasertransferprinting, nach Beendigung der beim Formgebungsverfahren auftretenden Scherung einen instantanen Strukturaufbau zeigen. Dies kann beispielsweise zu rauen Oberflächen oder beim Mehrschichtendruck zu Hohlräumen führen und ist somit ein großer Nachteil dieser Siloxanformulierungen. Die Strukturrelaxationsrate müsste so verringert werden, dass 60 Sekunden nach Ende der Scherbelastung ein Wert unter 80 % der Ruheviskosität erhalten wird. Nur ein solcher Wert erlaubt die Herstellung glatter Oberflächen beim 3D-Druck nach dem Drop-on-Demand-Verfahren und vermeidet die Bildung von Hohlräumen bzw. Fehlstellen beim Mehrschichtdruck.

Der Relaxationseffekt tritt sowohl in H-Siloxanen als auch in Vinyl-Siloxanen alleine sowie in deren Mischungen auf. Vinyl-Siloxane werden üblicherweise über eine Hydrosilylierung in Gegenwart von Pt-Katalysatoren mit einem Vernetzer vulkanisiert (= vernetzt), wobei der Vernetzer ein H-Siloxan ist, das wenigstens 3 Wasserstoffatome im Molekül enthält.

In CN107298859 wird der Zusammensetzung Nano-Silica, bevorzugt Gasphasen-Silica (= pyrogene Kieselsäure), als Füllstoff zugesetzt. Es wird jedoch nicht erwähnt, ob es sich um hydrophile oder hydrophobe Kieselsäure handelt. Aus den offenbarten Zusammensetzungen muss geschlossen werden, dass vielmehr hydrophile Kieselsäure eingesetzt wird, die möglicherweise durch das ebenfalls zugesetzte Siliconöl während des Herstellprozesses in-situ mit Dimethylsiloxygruppen modifiziert wird.

Es besteht somit weiterhin die Aufgabe, ein Verfahren zur Herstellung von niedrigviskosen, elektrisch leitfähigen, CNT-haltigen Siloxanen bereitzustellen, das die Nachteile des Stands der Technik nicht aufweist.

Überraschenderweise wurde nun gefunden, dass durch den Zusatz von Kieselsäure in einer Menge von ca. 1-20 Gew.-% die Strukturrelaxationsrate so verringert werden konnte, dass 60 Sekunden nach Ende der Scherbelastung ein Wert von $\leq$ 80 % der Ruheviskosität erhalten wird. Bei Kieselsäure-freien Formulierungen beträgt dieser Wert nach 60 Sekunden > 80 %.

Überraschenderweise zeigte sich zudem, dass bei den genannten Zusatzmengen an Kieselsäure die elektrische Leitfähigkeit der Formulierung nur moderat abnimmt. Es zeigte sich zudem, dass zum Erzielen des erfindungsgemäßen Effects die Kieselsäure mit Oberflächengruppen **-O-SiR$^1$R$^2$R$^3$** silyliert sein muss, wobei **R$^1$,R$^2$,R$^3$** unabhängig voneinander ausgewählt werden aus halogenierten oder unsubstituierten $C_1$-$C_{24}$-Kohlenwasserstoffresten. Derartige Kieselsäuren sind hydrophob. Der Einsatz hydrophiler

Kieselsäuren führt erfahrungsgemäß zu nicht lagerstabilen Formulierungen.

Überraschenderweise wurde zudem gefunden, dass sich durch einfache Dissolverdispergierung CNT-haltige und Kieselsäurehaltige Siloxane mit exzellenter elektrischer Leitfähigkeit bei gleichzeitig guter Fließfähigkeit und Relaxationsfähigkeit erhalten lassen.

Ein Gegenstand der Erfindung ist eine niedrigviskose, elektrisch leitfähige Siloxanzusammensetzung enthaltend

a) 0,1 - 5 Gew.-% CNTs;
b) 70 - 97,9 Gew.-% mindestens eines Siloxans, das ausgewählt wird aus Verbindungen der allgemeinen Formel **(I)**

$$(SiO_{4/2})_a(R^xSiO_{3/2})_b(R^x_2SiO_{2/2})_c(R^x_3SiO_{1/2})_d \qquad \textbf{(I)},$$

worin die Reste **R$^x$** unabhängig voneinander ausgewählt werden aus der Gruppe bestehend aus (i) Wasserstoff, (ii) **-CH=CH$_2$,** (iii) unsubstituierter oder fluorierter $C_1$-$C_{20}$-Kohlenwasserstoffrest, (iv) Phenylrest und (v) **-OH,** und worin die Indices **a, b, c** und **d** die Anzahl der jeweiligen Siloxaneinheit in der Verbindung angeben und unabhängig voneinander eine ganze Zahl im Bereich von 0 bis 100.000 bedeuten, wobei gilt **a + b + c + d $\geq$ 2;**
c) 1 - 20 Gew.-% mindestens einer hydrophoben Kieselsäure, die oberflächlich silyliert ist mit mindestens einer Organosiliciumverbindung, die ausgewählt ist aus Organosilanen der Formel **(IV)** und Organosilazanen der Formel **(V)**

$$R^1R^2R^3Si\text{-}Y \qquad (IV),$$

$$R^1R^2R^3Si\text{-}NH\text{-}SiR^1R^2R^3 \qquad (V),$$

worin die Reste $R^1, R^2, R^3$ jeweils unabhängig voneinander ausgewählt sind aus halogenierten oder unsubstituierten $C_1$-$C_{24}$-Kohlenwasserstoffresten; und

worin der Rest **Y** ausgewählt ist aus der Gruppe bestehend aus (i) Halogenatom, (ii) **-OR$^x$**, und (iii) **-OC(=O)OR$^x$**, wobei $R^x$ jeweils ausgewählt ist aus der Gruppe bestehend aus (i) Wasserstoff und (ii) substituierter oder unsubstituierter $C_1$-$C_{24}$-Kohlenwasserstoffrest, wobei substituiert meint, dass mindestens eine, jedoch nicht die an Silicium gebundene, $CH_2$-Gruppe durch **- O -** ersetzt sein kann;

d) 0 - 5 Gew.-% sonstige Füllstoffe;
wobei sich die Anteile auf das Gesamtgewicht der Zusammensetzung beziehen und die Summe aller Komponenten a) bis d) 100 Gew.-% ergibt.

Der Begriff niedrigviskos meint im Rahmen dieser Erfindung eine Viskosität von $\leq$ 1.000.000 mPa*s bei einer Scherrate von 1 s$^{-1}$, gemessen bei einer Temperatur von 25 °C. Da der Zusatz von CNTs die Viskosität der Siloxane erhöht, ist der niedrigstmögliche Viskositätswert durch die reinen Siloxane vorgegeben.

Der Begriff CNT bezeichnet Kohlenstoffnanoröhren, auch carbon nanotubes genannt. Hierbei handelt es sich um Nanomaterialien, die die Form von Hohlzylindern aufweisen und aus hexagonalen Kohlenstoffstrukturen bestehen. Der Fachmann ist in der Wahl der CNTs nicht beschränkt, er kann hier jegliche CNTs einsetzen, die kommerziell erhältlich sind oder über literaturbekannte Verfahren hergestellt werden können.

Die CNTs werden in einem Gehalt im Bereich von 0,1-5 Gew.-% bezogen auf das Gesamtgewicht der Zusammensetzung eingesetzt, bevorzugt ist ein Gehalt im Bereich von 0,5-2 Gew.-%.

Bevorzugt werden CNTs mit einem mittleren Durchmesser von 1-50 nm und einem Aspektverhältnis (Verhältnis von Länge zu Durchmesser) von $\leq$ 1.000 eingesetzt.

Es können SWCNTs (SWCNT = single-walled carbon nanotubes) oder MWCNTs (MWCNTS = multi-walled carbon nanotubes) verwendet werden, wobei MWCNTs bevorzugt sind.

Es wird mindestens ein Siloxan eingesetzt, womit auch Mischungen von Verbindungen der allgemeinen Formel (**I**) umfasst sind. Diese Mischungen können sowohl Mischungen von Siloxanen mit demselben Substitutionsmuster aber unterschiedlichen Indices, als auch Mischungen von Siloxanen mit unterschiedlichem Substitutionsmuster, als auch Mischungen von Siloxanen mit unterschiedlichem Substitutionsmuster und unterschiedlichen Indices sein.

Eine Mischung von Verbindungen der allgemeinen Formel (**I**) mit demselben Substitutionsmuster aber unterschiedlichen Indices liegt insbesondere bei Polysiloxanen vor. Der Einfachheit halber werden für Polysiloxane jedoch nicht die einzelnen Verbindungen der Mischung angegeben, sondern es wird eine der Formel (**I**) ähnliche mittlere Formel (**I'**) angegeben

$$(SiO_{4/2})_a(R^xSiO_{3/2})_b(R^x_2SiO_{2/2})_c(R^x_3SiO_{1/2})_d \qquad (I'),$$

worin die Reste $R^x$ dieselbe Bedeutung wie in Formel (**I**) haben, die Indices **a, b, c, d** jedoch unabhängig voneinander eine Zahl im Bereich von 0 bis 100.000 bedeuten und den mittleren Gehalt der jeweiligen Siloxaneinheit in der Mischung angeben.

Bevorzugt werden solche Mischungen der mittleren Formel (**I'**) eingesetzt, worin die Indices **a, b, c, d,** unabhängig voneinander ausgewählt werden aus einer Zahl im Bereich von 0 bis 1.000.

Die Reste $R^x$ in Formel (**I**) oder Formel (**I'**) werden bevorzugt unabhängig voneinander ausgewählt aus der Gruppe bestehend aus H, **-OH,** Methyl, Ethyl, Propyl, Phenyl, **-CH=CH$_2$**, Trifluormethyl und Trifluorpropyl. Besonders bevorzugt werden die Reste $R^x$ in Formel (**I**) oder Formel (**I'**) unabhängig voneinander ausgewählt aus der Gruppe bestehend aus H, Methyl, Ethyl, Propyl, Phenyl und **-CH=CH$_2$.**

Mischungen von Siloxanen mit unterschiedlichem Substitutionsmuster und unterschiedlichen Indices liegen insbesondere vor, wenn unterschiedlich substituierte Polysiloxane miteinander gemischt werden, z.B. H-Polysiloxane und Vinyl-Polysiloxane.

Bevorzugt wird mindestens ein Siloxan eingesetzt, das ausgewählt wird aus Verbindungen der allgemeinen Formel (**II**)

$$(R^x2SiO_{2/2})_c(R^x_3SiO_{1/2})_2 \qquad (II),$$

worin die Reste $R^x$ unabhängig voneinander ausgewählt werden aus der Gruppe bestehend aus (i) Wasserstoff, (ii)

-CH=CH$_2$, (iii) unsubstituierter oder fluorierter C$_1$-C$_{20}$-Kohlenwasserstoffrest, (iv) Phenylrest und (v) -OH, und worin der Index c die Anzahl der jeweiligen Siloxaneinheit in der Verbindung angibt und eine ganze Zahl im Bereich von 0 bis 100.000 bedeutet.

Die Reste R$^x$ in Formel (II) werden bevorzugt unabhängig voneinander ausgewählt aus der Gruppe bestehend aus H, -OH, Methyl, Ethyl, Propyl, Phenyl, -CH=CH$_2$, Trifluormethyl und Trifluorpropyl. Besonders bevorzugt werden die Reste R$^x$ in Formel (II) unabhängig voneinander ausgewählt aus der Gruppe bestehend aus H, Methyl, Ethyl, Propyl, Phenyl und -CH=CH$_2$.

Beispiele von bevorzugten Siloxanen und Polysiloxanen:

HMe$_2$Si-O-SiMe$_2$H, ViMe$_2$Si-O-SiMe$_2$Vi,
sowie Polysiloxane der mittleren Formeln
H-Me$_2$Si- (O-SiMe$_2$)$_m$-O-SiMe$_2$-H,
Me$_3$Si-O- (SiMe$_2$-O)$_n$(SiHMe-O)$_o$-SiMe$_3$,
H-Me$_2$Si-(O-SiMe$_2$)$_n$(SiHMe-O)$_o$-SiMe$_2$-H
ViMe$_2$Si- (O-SiMe$_2$)$_m$-O-SiMe$_2$Vi,
Me$_3$Si-O-(SiMe$_2$-O)$_n$(SiViMe-O)$_o$-SiMe$_3$,
ViMe$_2$Si-(O-SiMe$_2$)$_n$(SiViMe-O)$_o$-O-SiMe$_2$Vi,
worin die Indices m, n und o jeweils eine Zahl im Bereich von 1 bis 100.000 ist.

In einer ersten besonderen Ausführungsform wird in der erfindungsgemäßen Siloxanzusammensetzung als Siloxan eine Siloxan-mischung eingesetzt, enthaltend

a) mindestens ein H-Siloxan ausgewählt aus Verbindungen der allgemeinen Formel (IIa)

$$(R^x{}_2SiO_{2/2})_c(HR^xSiO_{2/2})_{c'}(R^x{}_3SiO_{1/2})_d(HR^x{}_2SiO_{1/2})_{d'} \qquad \text{(IIa)},$$

worin die Reste R$^x$ unabhängig voneinander ausgewählt werden aus der Gruppe bestehend aus (i) unsubstituierter oder fluorierter C$_1$-C$_{20}$-Kohlenwasserstoffrest und (ii) Phenylrest, und worin die Indices c, c', d und d' die Anzahl der jeweiligen Siloxaneinheit in der Verbindung angeben, worin c und c' jeweils eine ganze Zahl im Bereich von 0 bis 100.000 bedeuten, und worin d und d' jeweils den Wert 0 oder 1 oder 2 annehmen können, mit der Maßgabe, dass die Summe aus d und d' 2 ist; und

b) mindestens ein Vinylsiloxan ausgewählt aus Verbindungen der allgemeinen Formel (IIb)

$$(R^x{}_2SiO_{2/2})_c(ViR^xSiO_{2/2})_{c'}(ViR^x{}_2SiO_{1/2})_2 \qquad \text{(IIb)},$$

worin die Reste Vi jeweils eine Gruppe -CH=CH$_2$ bedeuten, die an das Siliciumatom gebunden ist; und worin die Reste R$^x$ unabhängig voneinander ausgewählt werden aus der Gruppe bestehend aus (i) unsubstituierter oder fluorierter C$_1$-C$_{20}$-Kohlenwasserstoffrest und (ii) Phenylrest; und worin die Indices c und c' die Anzahl der jeweiligen Siloxaneinheit in der Verbindung angeben, und c und c' jeweils eine ganze Zahl im Bereich von 0 bis 100.000 bedeuten.

Eine derartige Siloxanmischung wird auch als hydrosilylierbare Mischung bezeichnet, da sie mit allen bekannten Hydrosilylierungskatalysatoren und unter geeigneten Reaktionsbedingungen unter Ausbildung von Ethylenbrücken zwischen den Siloxanketten abreagieren kann.

In einer zweiten besonderen Ausführungsform wird in der erfindungsgemäßen Siloxanzusammensetzung als Siloxan eine Siloxan-mischung eingesetzt, enthaltend

a) 1 - 10 Gew.-% mindestens eines H-Siloxans der allgemeinen Formel (III) als Vernetzer

$$(R^x{}_2SiO_{2/2})_c(HR^xSiO_{2/2})_{c'}(R^x{}_3SiO_{1/2})_2 \qquad \text{(III)},$$

worin die Reste R$^x$ unabhängig voneinander ausgewählt werden aus der Gruppe bestehend aus (i) unsubstituierter oder fluorierter C$_1$-C$_{20}$-Kohlenwasserstoffrest und (ii) Phenylrest, und worin die Indices c und c' die Anzahl der jeweiligen Siloxaneinheit in der Verbindung angeben, wobei c eine ganze Zahl im Bereich von 0 bis 100.000 bedeutet, und wobei c' eine ganze Zahl im Bereich von 3 bis 100.000 bedeutet; und entweder

b1) 90 - 99 Gew.-% mindestens eines Vinylsiloxans der allgemeinen Formel (IV)

$$(R^x_2SiO_{2/2})_c(ViR^x_2SiO_{1/2})_2 \qquad \textbf{(IV)},$$

worin die Reste $R^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin der Index c die Anzahl der jeweiligen Siloxaneinheit in der Verbindung angibt, und c = 1.001 - 100.000 bedeutet; oder b2) 40 - 94 Gew.-% mindestens eines Vinylsiloxans der allgemeinen Formel **(IV')**

$$(R^x_2SiO_{2/2})_c(ViR^x_2SiO_{1/2})_2 \qquad \textbf{(IIb')},$$

worin die Reste $R^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin der Index **c** die Anzahl der jeweiligen Siloxaneinheit in der Verbindung angibt, und c = 1 - 1.000 bedeutet; und
0 - 50 Gew.-% mindestens eines H-Siloxans der allgemeinen Formel **(IIa')**

$$(R^x_2SiO_{2/2})_c(HR^x_2SiO_{1/2})_2 \qquad \textbf{(IIa')},$$

worin die Reste $R^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin der Index c die Anzahl der jeweiligen Siloxaneinheit in der Verbindung angibt, und c = 1 - 100.000 bedeutet.

Unter hydrophober Kieselsäure ist in diesem Zusammenhang Kieselsäure zu verstehen, die oberflächlich silyliert ist mit mindestens einer Organosiliciumverbindung, die ausgewählt ist aus Organosilanen der Formel (**IV**) und Organosilazanen der Formel (**V**)

$$R^1R^2R^3Si\text{-}Y \qquad \textbf{(IV)},$$

$$R^1R^2R^3Si\text{-}NH\text{-}SiR^1R^2R^3 \qquad \textbf{(V)},$$

worin die Reste $R^1$,$R^2$,$R^3$ jeweils unabhängig voneinander ausgewählt sind aus halogenierten oder unsubstituierten $C_1$-$C_{24}$-Kohlenwasserstoffresten; und
worin der Rest **Y** ausgewählt ist aus der Gruppe bestehend aus (i) Halogenatom, (ii) **-OR$^x$**, und (iii) **-OC(=O)OR$^x$** , wobei $R^x$ jeweils ausgewählt ist aus der Gruppe bestehend aus (i) Wasserstoff und (ii) substituierter oder unsubstituierter $C_1$-$C_{24}$-Kohlenwasserstoffrest, wobei substituiert meint, dass mindestens eine, jedoch nicht die an Silicium gebundene, $CH_2$-Gruppe durch **- O -** ersetzt sein kann. Durch die Silylierung befinden sich die Gruppen **-O-SiR$^1$R$^2$R$^3$** auf der Oberfläche einer ursprünglich hydrophilen Kieselsäure, so dass sie unpolar bzw. hydrophob ist. Aus EP1433749 A1 ist bekannt, wie derartige Kieselsäuren hergestellt werden können.

Es ist möglich, nur eine hydrophobe Kieselsäure einzusetzen oder auch Mischungen von verschiedenen hydrophoben Kieselsäuren, wobei sich bei Mischungen die Kieselsäuren sowohl in den Eigenschaften, wie z.B. der BET-Oberfläche, als auch in der Silylierung unterscheiden können. Weiterhin ist es möglich, dass die Kieselsäure mit einer oder mehreren Organosiliciumverbindungen silyliert ist. Bei den Organosiliciumverbindungen, die zur Silylierung der Kieselsäuren eingesetzt werden können, kann es sich daher auch um Gemische aus Organosilanen und/oder Organosilazanen der Formeln (**IV**) und (**V**) handeln.

Die Reste $R^1$,$R^2$,$R^3$ in den Formeln (**IV**) und (**V**) sind vorzugsweise unabhängig voneinander ausgewählt aus der Gruppe bestehend aus Methylrest, Ethylrest, Propylrest, 3,3,3-Trifluorpropylrest, Octylrest, Phenylrest und Vinylrest. Besonders bevorzugt sind die Reste $R^1$,$R^2$,$R^3$ in den Formeln (**IV**) und (**V**) unabhängig voneinander ausgewählt aus der Gruppe bestehend aus Methylrest und Vinylrest.

Die Reste $R^x$ sind bevorzugt ausgewählt aus der Gruppe bestehend aus Methylrest, Ethylrest und Propylrest.

Die Reste **Y** in Formel (**IV**) sind bevorzugt ausgewählt aus der Gruppe bestehend aus Chloratom, Methoxyrest, Ethoxyrest und Acetoxyrest.

Bevorzugte Beispiele für Organosiliciumverbindungen der Formeln (**IV**) und (**V**) sind

- Alkylchlorsilane, wie Trimethylchlorsilan,
- Methylmethoxysilane, wie Trimethylmethoxysilan,
- Methylethoxysilane, wie Trimethylethoxysilan,
- Methylacetoxysilane, wie Trimethylacetoxysilan,
- Phenylsilane, wie Phenyldimethylchlorsilan, Phenyldimethylmethoxysilan, und Phenyldimethylethoxysilan,

- Vinylsilane, wie Vinyldimethylchlorsilan, Vinyldimethylmethoxysilan und Vinyldimethylethoxysilan,
- Disilazane wie Hexamethyldisilazan, Divinyltetramethyldisilazan und Bis(3,3-trifluorpropyl)tetramethyldisilazan, und
- Silanole wie Trimethylsilanol, sowie
- deren Mischungen.

Bevorzugt wird zur Silylierung der Kieselsäure ein Silyliergemisch aus einem Trimethylsilan bzw. Hexamethyldisilazan und einem Vinylmethylsilan bzw. Bis-Vinyldimethyldisilazan eingesetzt werden, wobei der Anteil der Vinylmethylverbindung dabei jeweils kleiner 50 Gew.-% ist, bezogen auf das Gesamtgewicht des Silyliergemisches. Bevorzugt liegt der Anteil der Vinylmethylverbindung in einem Bereich von 0,1 bis 20 Gew.-% und besonders bevorzugt in einem Bereich von 1 bis 10 Gew.-%, jeweils bezogen auf das Gesamtgewicht des Silyliergemisches.

Besonders bevorzugt für die Silylierung der Kieselsäure sind Organosiliciumverbindungen, die ausgewählt sind aus der Gruppe bestehend aus Trimethylchlorsilan, Trimethylmethoxysilan, Vinyldimethylchlorsilan, Vinyldimethylmethoxysilan, Hexamethyldisilazan, Bis-Vinyldimethyldisilazan und deren Mischungen. Ganz besonders bevorzugt wird die Organosiliciumverbindung ausgewählt aus (a) der Gruppe bestehend aus Trimethylchlorsilan, Trimethylmethoxysilan, Vinyldimethylchlorsilan, Vinyldimethylmethoxysilan, Hexamethyldisilazan und Bis-Vinyldimethyldisilazan; oder (b) Mischungen aus Trimethylchlorsilan oder Trimethylmethoxysilan oder Hexamethyldisilazan mit Vinylmethylchlorsilan oder Vinylmethylmethoxysilan oder Bis-Vinyldimethyldisilazan, wobei der Anteil der Vinylmethylverbindung dabei jeweils kleiner 50 Gew.-% ist, bezogen auf das Gesamtgewicht der Mischung. Bevorzugt liegt der Anteil der Vinyldimethylverbindung in einem Bereich von 0,1 bis 20 Gew.-% und besonders bevorzugt in einem Bereich von 1 bis 10 Gew.-%, jeweils bezogen auf das Gesamtgewicht der Mischung.

Die hydrophobe Kieselsäure kann auf allen dem Fachmann bekannten Kieselsäuren basieren. Üblicherweise werden nasschemisch hergestellt Kieselsäuren, wie gefällte Kieselsäuren, Kieselgele oder kolloidale Kieselsäuren, oder in einem Hochtemperaturprozess hergestellte Kieselsäuren, so genannte pyrogene Kieselsäuren, eingesetzt.

Die hydrophobe Kieselsäure weist eine mittlere Partikelgröße von < 1000 nm (gemessen mittels Photonen-Korrelationsspektroskopie an geeignet verdünnten wässrigen Lösungen), und eine mittlere Primärteilchen-Partikelgröße in einem Bereich von 5 bis 100 nm auf (bestimmt mittels optischer Bildauswertung an TEM-Aufnahmen). Dabei existieren diese Primärteilchen nicht isoliert, sondern sind Bestandteile größerer Aggregate und Agglomerate.

Die hydrophobe Kieselsäure weist eine spezifische Oberfläche in einem Bereich von 0,1 bis 1.000 $m^2/g$ (gemessen nach der BET Methode nach DIN 66131 und 66132) auf, besonders bevorzugt liegt die spezifische Oberfläche in einem Bereich von 10 bis 500 $m^2/g$.

Die hydrophobe Kieselsäure weist Aggregate (Definition nach DIN 53206) mit Durchmessern im Bereich von 100 bis 1.000 nm auf, wobei die hydrophobe Kieselsäure weiterhin aus Aggregaten aufgebaute Agglomerate (Definition nach DIN 53206) aufweist, die in Abhängigkeit von der äußeren Scherbelastung (z.B. bedingt durch die Messbedingungen) Größen im Bereich von 1 bis 1.000 $\mu$m aufweisen können.

Besonders bevorzugt basiert die hydrophobe Kieselsäure auf pyrogener Kieselsäure. Pyrogene Kieselsäure wird vorzugsweise in einer Flammenreaktion aus Siliciumhalogenverbindungen oder Organosiliciumverbindungen, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt. Die Herstellung der pyrogenen Kieselsäure kann dabei wahlweise mit und ohne zusätzlichen Zusatz von Wasser erfolgen, zum Beispiel im Schritt der Reinigung; bevorzugt ist kein Zusatz von Wasser.

Die hydrophobe Kieselsäure weist einen Restsilanolgehalt von kleiner 100 % auf, bezogen auf den Silanolgehalt der unsilylierten, d.h. hydrophilen, Ausgangskieselsäure. Bevorzugt ist der Restsilanolgehalt kleiner 75 % und besonders bevorzugt ist der Restsilanolgehalt kleiner 50 %, jeweils bezogen auf den Silanolgehalt der unsilylierten, d.h. hydrophilen, Ausgangskieselsäure. Der Silanolgehalt wird mittels Säure-Base-Titration bestimmt, wie in G.W. Sears, Anal. Chem. 1956, 28, 1981 offenbart (vgl. analytische Methoden im Analytikteil).

Die hydrophobe Kieselsäure weist einen Kohlenstoffgehalt von $\geq$ 0,4 Gew.-% Kohlenstoff auf, bevorzugt ist ein Kohlenstoffgehalt in einem Bereich von 0,5 Gew.-% bis 15 Gew.-% Kohlenstoff, jeweils bezogen auf das Gewicht der hydrophoben Kieselsäure. Besonders bevorzugt liegt der Kohlenstoffgehalt in einem Bereich von 0,75 Gew.-% bis 10 Gew.-% Kohlenstoff, bezogen auf das Gewicht der hydrophoben Kieselsäure. Der Kohlenstoffgehalt kann durch Elementaranalyse bestimmt werden (vgl. analytische Methoden im Analytikteil).

Die hydrophobe Kieselsäure weist eine Methanolzahl von mindestens 30, bevorzugt von mindestens 40 und besonders bevorzugt von mindestens 50 auf. Die Methanolzahl ist der prozentuale Anteil von Methanol, welcher der Wasserphase zugesetzt werden muss, um vollständige Benetzung der Kieselsäure zu erreichen. Vollständige Benetzung bedeutet dabei ein vollständiges Einsinken der Kieselsäure in der Wasser-Methanol-Testflüssigkeit zu erreichen (vgl. analytische Methoden im Analytikteil).

Die hydrophobe Kieselsäure weist eine DBP-Zahl (Dibutylphthalatzahl) von kleiner 250 g/100 g, bevorzugt liegt die DBP-Zahl in einem Bereich von 150 g/100 g bis 250 g/100 g. Die DBP-Zahl kann in Anlehnung an DIN 53601 ermittelt werden (vgl. analytische Methoden im Analytikteil)

Die hydrophobe Kieselsäure weist eine Stampfdichte gemessen gemäß DIN EN ISO 787-11 in einem Bereich von 20 g/l bis 500 g/l, bevorzugt von 30 g/l bis 200 g/l auf.

Die hydrophobe Kieselsäure weist üblicherweise folgende Eigenschaften auf:

- BET-Oberfläche im Bereich von 0,1 bis 1.000 m$^2$/g,
- Restsilanolgehalt von < 100 %,
- Methanolzahl von mindestens 30,
- DBP-Zahl von $\leq$ 250 g/100 g,
- Stampfdichte im Bereich von 20 bis 500 g/l,
- Kohlenstoffgehalt von $\geq$ 0,4 Gew.-% Kohlenstoff.

Die hydrophobe Kieselsäure weist bevorzugt folgende Eigenschaften auf:

- BET-Oberfläche im Bereich von 10 bis 500 m$^2$/g,
- Restsilanolgehalt von < 75 %,
- Methanolzahl von mindestens 40,
- DBP-Zahl im Bereich von 150 g/100 g bis 250 g/100 g,
- Stampfdichte im Bereich von 30 bis 200 g/l,
- Kohlenstoffgehalt im Bereich von 0,5 bis 15 Gew.-% Kohlenstoff.

Die hydrophobe Kieselsäure weist besonders bevorzugt folgende Eigenschaften auf:

- BET-Oberfläche im Bereich von 100 bis 400 m$^2$/g,
- Restsilanolgehalt von < 50 %,
- Methanolzahl von mindestens 50,
- DBP-Zahl im Bereich von 150 g/100 g bis 250 g/100 g,
- Stampfdichte im Bereich von 30 bis 200 g/l,
- Kohlenstoffgehalt im Bereich von 0,75 bis 10 Gew.-% Kohlenstoff.

Als sonstige Füllstoffe können alle gebräuchlichen Hilfsstoffe und verstärkenden Füllstoffe eingesetzt werden, dies können z.B. Quarz, Diatomeenerde, Metalloxide wie Aluminiumoxide, Zinkoxide, Titanoxide oder Zirkonoxide, Metallsilikate wie Calciumsilikat, Carbonate wie Calciumcarbonat, Sulfate wie Calciumsulfat, Farbpigmente, und Ruße sein.

Ein weiterer Gegenstand der Erfindung ist ein Verfahren zur Herstellung von niedrigviskosen, elektrisch leitfähigen, CNT-haltigen Siloxanen, wobei die Komponenten a) - d) der erfindungsgemäßen Siloxanzusammensetzung mithilfe eines Dissolvers mit Abstreifer dispergiert werden.

Die Dispergierung erfolgt mit einem Dissolver (Hochgeschwindigkeitsmischer), wobei üblicherweise zusätzlich ein Abstreifer eingesetzt wird, um eine gleichmäßige Verteilung der CNTs zu erreichen. Bevorzugt wird ein Planetendissolver mit Abstreifer eingesetzt. Besonders bevorzugt wird ein Vakuum-Planetendissolver mit Abstreifer und Balkenrührer eingesetzt. Es können Dissolverscheiben mit beliebiger Anordnung und Anzahl an Zähnen eingesetzt werden.

Zur Dispergierung können die Komponenten a) bis d) der erfindungsgemäßen Siloxanzusammensetzung in beliebiger Reihenfolge zugegeben und dispergiert werden.

In einer besonderen Ausführungsform des Verfahrens (Variante A) wird die benötigte Menge Siloxan vorgelegt, anschließend werden erst die CNTs und dann die hydrophobe Kieselsäure eingemischt und dispergiert. Die Menge an Siloxan, hydrophober Kieselsäure und CNTs kann dabei so bemessen sein, dass sie den angestrebten Feststoffanteilen der hydrophoben Kieselsäuren und CNTs in der fertigen Mischung entspricht, oder es kann auch ein sogenannter Masterbatch-Ansatz hergestellt werden. Dabei wird entweder die Siloxanmenge und/oder die hydrophobe Kieselsäure- und CNT-Menge so bemessen, dass ein höherer Feststoffanteil in der Mischung resultiert, als später benötigt wird. Nach Beendigung der Dispergierung kann die konzentrierte Feststoffdispersion auf den Feststoff-Zielwert mit weiterem Siloxan herunterverdünnt werden. Dies kann unmittelbar nach der Dispergierung oder auch später, ggf. in einem anderen Mischgerät, erfolgen. Zur Verdünnung kann dasselbe Siloxan oder ein anderes Siloxan der Formel (I) eingesetzt werden.

In einer weiteren bevorzugten Ausführungsform des Verfahrens (Variante B) wird erst die benötigte Menge Siloxan vorgelegt, anschließend werden erst die hydrophobe Kieselsäure und dann die CNTs eingemischt und dispergiert. Optional kann auch hier der oben beschriebene Masterbatch-Ansatz verfolgt werden.

In einer weiteren bevorzugten Ausführungsform des Verfahrens (Variante C) werden hydrophobe Kieselsäure und CNTs gemeinsam in das Siloxan eingerührt und anschließend gemeinsam dispergiert. Optional kann auch hier der oben beschriebene Masterbatch-Ansatz verfolgt werden.

In einer weiteren bevorzugten Ausführungsform des Verfahrens (Variante D) werden hydrophobe Kieselsäure und CNTs unabhängig voneinander in das Siloxan eingemischt und dispergiert, d.h. in unterschiedlichen Mischbehältern eingemischt und dispergiert, und anschließend werden die beiden Mischungen unter Mischen und ggf. weiteren Dispergieren vereinigt.

Besonders bevorzugt sind Variante B und C, ganz besonders bevorzugt ist Variante C.

Die Zugabe der Komponenten a) bis d) kann unabhängig vom genauen Verfahren jeweils portionsweise oder durch Zugabe der Gesamtmenge erfolgen. Bevorzugt ist jeweils die Zugabe der Gesamtmenge.

Vor der eigentlichen Dispergierung kann es vorteilhaft sein, die Feststoffe bei einer niedrigeren Umlaufgeschwindigkeit der Mischwerkzeuge in das Siloxan einzurühren oder einzumischen. Auf diese Weise kann eine entsprechende Vorbenetzung der Feststoffe mit Siloxan erreicht werden.

Optional kann der Mischbehälter und damit das enthaltene Mischgut während der Dispergierung temperiert werden, d.h. durch Kühlen oder Heizen auf einer Zieltemperatur gehalten werden. Üblicherweise liegt die Temperatur in einem Bereich von 0 - 200 °C, bevorzugt in einem Bereich von 20 - 100 °C.

Optional kann das erfindungsgemäße Verfahren unter Vakuum durchgeführt werden. Bevorzugt erfolgt die Dispergierung, d.h. Dispergierintervalle inklusive Dispergierpausen, unter Vakuum. Das Vakuum beträgt üblicherweise $\leq$ 1.000 mbar, bevorzugt $\leq$ 800 mbar und besonders bevorzugt $\leq$ 500 mbar.

Weiterhin kann es vorteilhaft sein, im Anschluss an die Dispergierung Vakuum anzulegen. Dies kann im gleichen Gerät wie die Dispergierung erfolgen, oder in einem anderen Apparat.

Üblicherweise erfolgt das Anlegen von Vakuum unter Rühren. Das Vakuum beträgt üblicherweise $\leq$ 1.000 mbar, bevorzugt $\leq$ 800 mbar und besonders bevorzugt $\leq$ 500 mbar.

Bevorzugt wird beim Leistungsmaximum des Dissolvers dispergiert und es wird mindestens eine Dispergierpause im Bereich von 1 Minute bis 60 Minuten eingelegt, wobei das Leistungsmaximum ermittelt wird, indem die Dissolver-Drehzahl jeweils nach 5 Minuten um 250 rpm erhöht und die Dispergierleistung gegen die Drehzahl des Dissolvers ausgewertet wird, so dass eine optimale Umlaufgeschwindigkeit des Dissolvers für das spezifische Leistungsmaximum ermittelt werden kann. Auf diese Weise können deutlich bessere Werte bei der Leitfähigkeit des Materials erhalten werden.

Die Dispergierung erfolgt dann bei einer hohen Umlaufgeschwindigkeit der Dispergierwerkzeuge und insbesondere der Dissolver-scheibe. Der so erzielte hohe Leistungseintrag führt zu der gewünschten feindispersen Verteilung der CNTs im Siloxan. Wesentlich für das Dispersionsergebnis, und damit für eine optimal hohe elektrische Leitfähigkeit der CNT-Siloxan-Mischung, ist dabei ein maximaler Leistungseintrag der Mischwerkzeuge.

Der maximale Leistungseintrag ist dabei abhängig von den gewählten Mischwerkzeugen, deren geometrischer Anordnung, der Umlaufgeschwindigkeit insbesondere der Dissolverscheibe, der Temperatur und der effektiven Viskosität des Mischguts, d.h. der Viskosität des Siloxans, die unter anderem vom Polymerisationsgrad des Siloxans abhängt und der zugesetzten CNT-Menge. Die Vielzahl der Einflussparameter auf den Leistungseintrag macht eine einmalige experimentelle Bestimmung des maximalen Leistungseintrags für das gegebene Mischgerät und die gewünschte CNT-Siloxan-Mischung notwendig. Dazu wird das Mischgut in der gewünschten Zusammensetzung und Menge vorgelegt und anschließend die Umlaufgeschwindigkeit des Dispergierwerkzeugs schrittweise, d.h. stufenweise (z.B. jede Minute um jeweils 250 rpm) erhöht. Dabei wird für jede Stufe der Leistungseintrag erfasst. Dies kann beispielsweise erfolgen durch Messung des Drehmomentes der Dispergierwelle, z.B. durch Dehnmessstreifen oder andere technisch übliche Messvorrichtungen, oder durch Messung der Stromaufnahme des Dispergiermotors durch handelsübliche Stromleistungsmesser (Wattmeter).

Aus der daraus erhaltenen Kennlinie kann leicht der Bereich des maximalen Leistungseintrags in Abhängigkeit von der Umlaufgeschwindigkeit des Dispergierwerkzeugs abgelesen werden. Üblicherweise entspricht die Umlaufgeschwindigkeit des Dispergierwerkzeugs am Leistungsmaximum nicht der maximal technisch möglichen Umlaufgeschwindigkeit des Werkzeugs.

Die Dispergierung wird dabei von mindestens einer Dispergierpause unterbrochen. Dispergierpause bedeutet in diesem Zusammenhang, dass das Dispergierwerkzeug (Dissolverscheibe) angehalten wird. Optional können zusätzlich vorhandene Mischwerkzeuge mit niedrigem Leistungseintrag, wie z.B. Balkenmischer, weiterlaufen. Bevorzugt werden alle Mischwerkzeuge angehalten, so dass der mechanische Leistungseintrag während der Dispergierpause gleich null ist. Bevorzugt werden 1 - 10 Dispergierpausen eingelegt, besonders bevorzugt werden 1 - 5 Dispergierpausen eingelegt, ganz besonders bevorzugt wird nur eine Dispergierpause eingelegt.

Die Dauer der Dispergierpausen beträgt jeweils $\geq$ 1 Minute. Aus Gründen der Raum-Zeit-Ausbeute liegt die Dauer der Dispergierpausen bevorzugt in einem Bereich von 1 Minute bis 60 Minuten. Besonders bevorzugt liegt die Dauer der Dispergierpausen in einem Bereich von 5 Minuten bis 45 Minuten, ganz besonders bevorzugt liegt die Dauer der Dispergierpausen im Bereich von 5 Minuten bis 30 Minuten.

Der Zeitpunkt der Dispergierpausen kann während der Dispergierung willkürlich gewählt werden, z.B. in regelmäßigen oder beliebigen Abständen. Bevorzugt sind regelmäßige Abstände.

Die Dauer der Dispergierintervalle zwischen den Dispergierpausen liegt im Bereich von 1 Minute bis 300 Minuten. Bevorzugt liegt die Dauer der Dispergierintervalle im Bereich von 1 Minuten bis 120 Minuten, besonders bevorzugt liegt die Dauer der Dispergierintervalle im Bereich von 5 Minuten bis 60 Minuten, ganz besonders bevorzugt liegt die Dauer der Dispergierintervalle im Bereich von 5 Minuten bis 30 Minuten.

Die Summe der Dispergierintervalle ohne Dispergierpausen, d.h. die reine Dispergierzeit wird im Rahmen dieses Patentes als Gesamtdispergierzeit definiert. Das heißt beispielsweise, dass bei drei 10-minütigen Dispergierintervallen, jeweils unterbrochen von einer 30-minütigen Dispergierpause, die Gesamtdispergierzeit 30 Minuten beträgt.

Aus Gründen der Raum-Zeit-Ausbeute, und um eine möglicherweise mechanische Schädigung der CNTs zu vermeiden, ist es sinnvoll, die Gesamtdispergierzeit so kurz wie möglich zu halten.

Optional kann die erfindungsgemäße Siloxanzusammensetzung neben der hydrophoben Kieselsäure und den CNTs sonstige Füllstoffe enthalten. Diese können zusammen mit der hydrophoben Kieselsäure bzw. dem CNT gemäß den o. g. Ausführungsformen (Varianten A bis D) zugemischt werden oder unabhängig von der hydrophoben Kieselsäure bzw. den CNTs.

Bevorzugt ist eine unabhängige Zugabe, das heißt in einem separaten Prozessschritt.

Vorzugsweise werden die sonstigen Füllstoffe der Siloxanzusammensetzung im Anschluss an das Einmischen von hydrophober Kieselsäure und CNT zugemischt. Das Einmischen kann unter Eintrag hoher Scherenergie wie oben beschrieben oder durch einfaches Einrühren ohne Eintrag hoher Scherenergie wie beispielsweise durch eine langsam laufende Dispergierscheibe oder einen technisch üblichen Rührer wie z.B. ein Balken- oder Ankerrührer erfolgen. Bevorzugt ist das Einmischen mittels Rührer.

Ein weiterer Gegenstand der Erfindung ist die Verwendung der erfindungsgemäßen Siloxanzusammensetzung gemäß der zweiten bevorzugten Ausführungsform als formgebendes Material beim 3D-Druck oder Siebdruck.

Ein weiterer Gegenstand der Erfindung ist ein elastischer, elektrisch leitfähiger Formkörper, erhältlich durch ein Verfahren umfassend die folgenden Schritte:

a) Herstellung einer Siloxanzusammensetzung gemäß der zweiten bevorzugten Ausführungsform,
b) Umsetzung dieser Siloxanzusammensetzung mit einem Hydrosilylierungskatalysator, und
c) Formgebung.

Als Hydrosilylierungskatalysator kann jeder dem Fachmann bekannte Katalysator eingesetzt werden. Üblicherweise werden Pt(0)-Katalysatoren, wie der Karstedt-Katalysator, eingesetzt. Die Menge an Katalysator kann der Fachmann frei wählen. Üblicherweise werden 1 bis 1000 ppm Pt eingesetzt.

Die übrigen Reaktionsbedingungen wie Druck, Temperatur und molares Verhältnis bei der Hydrosilylierung können vom Fachmann frei gewählt werden.

**Beispiele**

Chemikalien:

CNTs LUCAN BT1001M, Hersteller LG Chem Ltd., mittlerer Durchmesser laut Herstellerangaben: 5 nm

**ViPo 1.000:** Vinyldimethylsiloxy-endständiges Polydimethylsiloxan mit einer Viskosität von 1.000 mPa*s, erhältlich bei Gelest Inc. unter der Produktbezeichnung DMS-V31 (Gelest-Katalog)

**ViPo 20.000:** Vinyldimethylsiloxy-endständiges Polydimethylsiloxan mit einer Viskosität von 20.000 mPa*s, erhältlich bei Gelest, Inc. unter der Produktbezeichnung DMS-V42 (Gelest-Katalog)

**HPo 1.000:** Hydridodimethylsiloxy-endständiges Polydimethylsiloxan mit einer Viskosität von 1.000 mPa*s, erhältlich bei Gelest Inc. unter der Produktbezeichnung DMS-H31 (Gelest-Katalog)

Hydrophobe Kieselsäure A: pyrogene Kieselsäure mit Trimethylsiloxygruppen, BET-Oberfläche: 187 $m^2$/g, Kohlenstoffgehalt: 4,5 Gew.-%, Methanolzahl: 72%, Restsilanolgehalt: 25 %, DBP-Zahl: 161 g/100g, Stampfdichte: 150 g/ml.

Hydrophobe Kieselsäure B: pyrogene Kieselsäure mit Trimethylsiloxygruppen, BET-Oberfläche: 89 $m^2$/g, Kohlenstoffgehalt: 1,9 Gew.-%, Methanolzahl: 78%, Restsilanolgehalt: 30 %, DBP-Zahl: 153 g/100g, Stampfdichte: 135 g/ml

Hydrophobe Kieselsäure HDK® 18: pyrogene Kieselsäure mit Dimethylsiloxygruppen, BET-Oberfläche: 132 $m^2$/g, Kohlenstoffgehalt: 4,7 Gew.-%, Methanolzahl: 79%, Restsilanolgehalt: 21 %, DBP-Zahl: 165 g/100g, Stampfdichte: 52 g/ml (erhältlich bei WACKER Chemie AG).

**Analytische Methoden zur Charakterisierung der Kieselsäuren**

Methanolzahl:

Test der Benetzbarkeit mit Wasser-Methanol-Gemischen (Volumen-% MeOH in Wasser): Einschütteln eines gleichen Volumens der Kieselsäure mit gleichem Volumen eines Wasser-Methanol-Gemisches

- Start mit 0 Vol.-% Methanol
- bei Nicht-Benetzung schwimmt zumindest ein Teil der Kieselsäure auf: Es ist ein Gemisch mit um 5 Vol.-% höherem MeOH-Anteil zu verwenden
- bei Benetzung sinkt das gesamte Volumen der Kieselsäure ein: Anteil MeOH (Vol.-%) in Wasser gibt die Methanolzahl.

Kohlenstoffgehalt (%C):

Die Elementaranalyse auf Kohlenstoff erfolgte nach DIN ISO 10694 unter Verwendung eines CS-530 Elementaranalysators der Firma Eltra GmbH (D-41469 Neuss).

Rest-Silanolgehalt:

Die Bestimmung des Rest-Silanolgehalts erfolgte analog G. W. Sears et al. (Analytical Chemistry 1956, 28, 1981ff) mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure. Der Rest-Silanolgehalt in % kann anschließend nach der folgenden Formel errechnet werden:

$$\% \ \text{SiOH} = \text{SiOH(silyl)}/\text{SiOH(phil)}*100,$$

mit

SiOH(phil): Titrationsvolumen aus der Titration der unbehandelten Kieselsäure
SiOH(silyl): Titrationsvolumen aus der Titration der silylierten Kieselsäure

DBP-Zahl:

Die Dibutylphthalatabsorption wird gemessen mit einem Gerät RHEOCORD 90 der Fa. Haake, Karlsruhe in Anlehnung an DIN 53601. Hierzu werden 12 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums werden der Kneter und die DBP-Dosierung automatisch abgeschaltet. Aus der verbrauchten Menge DBP und der eingewogenen Menge der Partikel wird die DBP-Absorption berechnet nach: DBP-Zahl (g/100 g) = (Verbrauch DBP in g/Einwaage Pulver in g) $\times$ 100.

Stampfdichte:

Die Stampfdichte wird gemäß DIN EN ISO 787-11 gemessen.

Viskositätsmessung:

Die Messungen der Viskosität wurden an einem luftgelagerten MCR 302 Rheometer der Firma Anton Paar bei 25 °C durchgeführt. Es wurde ein Kegel-Platte-System (25 mm, 2°) mit einem Spaltmaß von 105 $\mu$m verwendet. Das überschüssige Material wurde bei einem Spalt-Abstand von 115 $\mu$m mit einem Spatel entfernt (getrimmt). Anschließend bewegte sich der Kegel auf 105 $\mu$m Spaltabstand, damit der komplette Spalt gefüllt ist. Vor jeder Messung wird eine "Vorscherung" durchgeführt, bei der die Scherhistorie durch die Probenvorbereitung, die Auftragung und das Trimmen gelöscht wird. Die Vorscherung erfolgt für 60 Sekunden bei Scherrate 10 s$^{-1}$, gefolgt von einer Ruhezeit von 300 Sekunden. Die Scherviskosität wird mittels eines Stufenprofils bestimmt, bei dem die Probe mit konstanter Scherrate von 1 s$^{-1}$, 10 s$^{-1}$ und 100 s$^{-1}$ für jeweils 100 Sekunden geschert wird. Alle 10 Sekunden wird ein Messwert aufgezeichnet, wodurch sich 10 Messpunkte pro Scherrate ergeben. Der Mittelwert aus diesen 10 Messpunkten ergibt die Scherviskosität bei der jeweiligen Scherrate.

Widerstandsmessung:

Bei einer Vierleitermessung wird der Kontaktwiderstand nicht mitgemessen, da der Strom an zwei Kontakten angelegt wird und an zwei weiteren Kontakten die Spannung U des bereits durch die Probe geflossenen Stromes $I_U$ gemessen wird.

$$R = \frac{U}{I_U} \quad [\Omega]$$

Der Widerstand R von nicht vulkanisierten Siloxanen wird mit dem Multimeter Model 2110 5 ½ digit von Keithley Instrument und einer angefertigten Messapparatur aus PP Natur und Edelstahl-(1.4571)-Elektroden gemessen. Die Verbindung des Messgeräts mit den Elektroden erfolgt mittels Messingkontakten und Laborleitungen. Die Messapparatur ist eine Form mit definierten Maßen für L x B x H von 16 cm x 3 cm x 0,975 cm, in die das Siloxan zur Messung gestrichen wird. Die beiden äußeren flächigen Elektroden sind im Abstand von 16 cm angebracht, wodurch der Strom die ganze Probe durchströmt. Die beiden Punkt-Elektroden mit einem Durchmesser von 1 cm befinden sich in der Bodenplatte im Abstand von 12 cm (l) und messen die Spannung. Mit folgender Formel wird der spezifische Widerstand aus dem gemessenen Widerstand R berechnet.

$$\rho = \frac{R \cdot h \cdot w}{l} \quad [\Omega cm] \, ,$$

mit Probenhöhe h [cm], Probenbreite w [cm] und Elektrodenabstand l [cm]
(hier: h = 0,975 cm, w = 3 cm, l = 12 cm)
Eine Probe wird als gut bezeichnet, wenn sie einen spezifischen Widerstand von < 20 $\Omega$*cm bezogen auf je 1 Gew.-% CNT aufweist.

Messung der Relaxation:

Oszillation-Rotation-Oszillation (ORO) Test:
Die Ruhestruktur wird im ersten Abschnitt während 300 Sekunden (ein Messwert alle 10 Sekunden) bei konstanter Deformation und Kreisfrequenz gemessen ($\gamma$ = 0,1 %, $\omega$ = 10 Hz). Anschließend folgt die Belastungsphase in Rotation für 0,5 Sekunden mit einer Scherrate von $\gamma$ = 100 s$^{-1}$, welche mit einer Pause von 0,05 Sekunden endet, um den Kegel des Viskositätsmessgeräts (luftgelagertes MCR 302 Rheometer der Firma Anton Paar) zu stoppen. Im letzten Abschnitt von 19,6 Minuten (300 Messwerte logarithmisch von 1 - 10 Sekunden aufgenommen) werden dieselben Parameter, wie im ersten Abschnitt ($\gamma$ = 0,1 %, $\omega$ = 10 Hz), angewendet um den Strukturaufbau zu beobachtet.

|  | 300 Sek (30 x 10 Sek) | 0,5 Sek | 0,05 Sek Pause | 19,6 Min (300 x 1-10 Sek) |
|---|---|---|---|---|
| $\gamma$ | 0,1 % | - | - | 0,1 % |
| $\omega$ | 10 Hz | - | - | 10 Hz |
| $\dot{\gamma}$ | - | 100 s$^{-1}$ | - | - |

Mischmethode:

Die Mischungen wurden in einem Labotop 1LA der Firma PC Laborsystem GmbH mit einem Fassungsvermögen von 1 Liter bei 300 mbar Vakuum und Raumtemperatur hergestellt. Als Werkzeuge wurden eine Dissolver-Scheibe (14 Zähne, Zähne 90° zur Scheibe, Durchmesser 52 cm), ein Balkenrührer (Standardwerkzeug) und ein Abstreifer mit Temperaturmessung verwendet. Die Mischungen werden mit höchstmöglicher Leistung gemischt, die Leistung kann am Gerät abgelesen werden. Bei diesem Mischprozess wird die höchste Leistung von 1.900 Watt im Bereich von 500 rpm bis 1400 rpm erzielt. Die gewählte Drehzahl von 1250 rpm ergibt eine Umlaufgeschwindigkeit von 3,4 m/s.
Bei Dissolvern ohne integrierte Leistungsanzeige kann die Leistung über ein Leistungsmessgerät (Wattmeter) ermittelt werden.

Beispiel 1:

In einem Labormischer der Fa. VMA-Getzmann GmbH mit Zahn-Dissolverscheibe (Durchmesser 40 mm) wurde 1 Gew.-% CNT (1 g) in eine Mischung aus ViPo 1.000 (38 Gew.-%), HPo 1.000 (39 Gew.-%) und 22 Gew.-% der Kieselsäure A für 15 Minuten bei Raumtemperatur und 6.000 rpm (12,57 m/s) unter Vakuum (300 mbar) eingemischt (Gesamtmasse: 100 g). Es wurde eine homogene, schwarze Paste mit einem spezifischen Widerstand von 11 $\Omega$*cm erhalten. Die Strukturrelaxation zeigt nach 60 Sekunden Relaxation 74,9 % des Speichermoduls bezogen auf den Plateauwert des Speichermoduls nach 20 Minuten. Die Viskosität beträgt bei Scherrate 1 s$^{-1}$ 529.000 mPa*s und bei Scherrate 10 s$^{-1}$ 97.200 mPa*s.

Es wird eine gute Relaxation bei guten Viskositätswerten und guter Leitfähigkeit erhalten.

Beispiel 2:

In einem Labormischer der Fa. VMA-Getzmann GmbH mit Zahn-Dissolverscheibe (Durchmesser 40 mm) wurde 0,5 Gew.-% CNT (1 g) in eine Mischung aus ViPo 1.000 (38 Gew.-%), HPo 1.000 (39 Gew.-%) und 22 Gew.-% der Kieselsäure A für 6 Minuten bei Raumtemperatur und 6.000 rpm (12,57 m/s) unter Vakuum (300 mbar) eingemischt (Gesamtmasse: 100 g). Es wurde eine homogene, schwarze Paste mit einem spezifischen Widerstand von 35 $\Omega$*cm erhalten. Die Strukturrelaxation zeigt nach 60 Sekunden Relaxation 76,4 % des Speichermoduls bezogen auf den Plateauwert des Speichermoduls nach 20 Minuten. Die Viskosität beträgt bei Scherrate 1 s$^{-1}$ 173.000 mPa*s und bei Scherrate 10 s$^{-1}$ 43.400 mPa*s.

Es wird eine gute Relaxation bei guten Viskositätswerten und akzeptabler Leitfähigkeit erhalten.

Beispiel 3:

In einem Labormischer der Fa. VMA-Getzmann GmbH mit Zahn-Dissolverscheibe (Durchmesser 40 mm) wurde eine 100 g Mischung aus 1 Gew.-% CNT, 5 Gew.-% der Kieselsäure A in ViPo 20.000 für 15 Minuten bei Raumtemperatur und 3.000 rpm (6,28 m/s) unter Vakuum (300 mbar) hergestellt. Es wurde eine homogene, schwarze Paste erhalten, welche einen spezifischen Widerstand von 17 $\Omega$*cm besitzt. Die Strukturrelaxation weist einen Cross-over von G">G' nach G"<G' nach 2,6 Sekunden Erholung auf und erreicht nach 60 Sekunden Relaxation 72,2 % des Speichermoduls bezogen auf den Plateauwert des Speichermoduls nach 20 Minuten. Die Viskosität beträgt bei Scherrate 1 s$^{-1}$ 371.000 mPa*s und bei Scherrate 10 s$^{-1}$ 94.300 mPa*s.

Es wird eine gute Relaxation bei guten Viskositätswerten und guter Leitfähigkeit erhalten.

Beispiel 4:

In einem Labormischer der Fa. VMA-Getzmann GmbH mit Zahn-Dissolverscheibe (Durchmesser 40 mm) wurde eine 100 g Mischung aus 1 Gew.-% CNT, 10 Gew.-% der Kieselsäure A in ViPo 20.000 für 15 Minuten bei Raumtemperatur und 3.000 rpm (6,28 m/s) unter Vakuum (300 mbar) hergestellt. Es wurde eine homogene, schwarze Paste erhalten, welche einen spezifischen Widerstand von 24 $\Omega$*cm besitzt. Die Strukturrelaxation weist einen Cross-over von G">G' nach G"<G' nach 2,5 Sekunden Erholung auf und erreicht nach 60 Sekunden Relaxation 72,9 % des Speichermoduls bezogen auf den Plateauwert des Speichermoduls nach 20 Minuten. Die Viskosität beträgt bei Scherrate 1 s$^{-1}$ 487.000 mPa*s und bei Scherrate 10 s$^{-1}$ 125.000 mPa*s.

Es wird eine gute Relaxation bei guten Viskositätswerten und akzeptabler Leitfähigkeit erhalten.

Beispiel 5:

In einem Labormischer der Fa. VMA-Getzmann GmbH mit Zahn-Dissolverscheibe (Durchmesser 40 mm) wurde eine 100 g Mischung aus 1 Gew.-% CNT, 15 Gew.-% der Kieselsäure A in ViPo 20.000 für 15 Minuten bei Raumtemperatur und 3.000 rpm (6,28 m/s) unter Vakuum (300 mbar) hergestellt. Es wurde eine homogene, schwarze Paste erhalten, welche einen spezifischen Widerstand von 33 $\Omega$*cm besitzt. Die Strukturrelaxation weist einen Cross-over von G">G' nach G"<G' nach 2,4 Sekunden Erholung auf und erreicht nach 60 Sekunden Relaxation 70,1 % des Speichermoduls bezogen auf den Plateauwert des Speichermoduls nach 20 Minuten. Die Viskosität beträgt bei Scherrate 1 s$^{-1}$ 598.000 mPa*s und bei Scherrate 10 s$^{-1}$ 154.000 mPa*s.

Es wird eine gute Relaxation bei guten Viskositätswerten und akzeptabler Leitfähigkeit erhalten.

Beispiel 6:

In einem Labormischer der Fa. VMA-Getzmann GmbH mit Zahn-Dissolverscheibe (Durchmesser 40 mm) wurde eine 100 g Mischung aus 1 Gew.-% CNT, 20 Gew.-% der Kieselsäure A in ViPo 20.000 für 15 Minuten bei Raumtemperatur und 3.000 rpm (6,28 m/s) unter Vakuum (300 mbar) hergestellt. Es wurde eine homogene, schwarze Paste erhalten, welche einen spezifischen Widerstand von 61 $\Omega$*cm besitzt. Die Strukturrelaxation weist einen Cross-over von G">G' nach G"<G' nach 2,4 Sekunden Erholung auf und erreicht nach 60 Sekunden Relaxation 65,5 % des Speichermoduls bezogen auf den Plateauwert des Speichermoduls nach 20 min. Die Viskosität beträgt bei Scherrate 1 s$^{-1}$ 758.000 mPa*s und bei Scherrate 10 s$^{-1}$ 206.000 mPa*s.

Es wird eine gute Relaxation bei guten Viskositätswerten und noch akzeptabler Leitfähigkeit erhalten.

Beispiel 7:

In einem Labormischer der Fa. VMA-Getzmann GmbH mit Zahn-Dissolverscheibe (Durchmesser 40 mm) wurde eine 100 g Mischung aus 10 Gew.-% der Kieselsäure A in ViPo 20.000 für 1 Stunde bei Raumtemperatur und 6.000 rpm (12,57 m/s) unter Vakuum (300 mbar) hergestellt. Anschließend wurde 1 Gew.-% CNT für 15 Minuten bei Raumtemperatur und 3.000 rpm (6,28 m/s) unter Vakuum (300 mbar) Es wurde eine homogene, schwarze Paste erhalten, welche einen spezifischen Widerstand von 19 $\Omega$*cm besitzt. Die Strukturrelaxation weist einen Cross-over von G">G' nach G"<G' nach 2,4 Sekunden Erholung auf und erreicht nach 60 Sekunden Relaxation 70,8 % des Speichermoduls bezogen auf den Plateauwert des Speichermoduls nach 20 Minuten. Die Viskosität beträgt bei Scherrate 1 s$^{-1}$ 492.000 mPa*s und bei Scherrate 10 s$^{-1}$ 128.000 mPa*s.

Es wird eine gute Relaxation bei guten Viskositätswerten und akzeptabler Leitfähigkeit erhalten.

Beispiel 8(nicht erfindungsgemäß):

In einem Labormischer der Fa. VMA-Getzmann GmbH mit Zahn-Dissolverscheibe (Durchmesser 40 mm) wurden eine 100 g Mischung von 1 Gew.-% CNT in ViPo 20.000 für 15 Minuten bei Raumtemperatur und 6.000 rpm (12,57 m/s) unter Vakuum gemischt. Es wurde eine homogene, schwarze Paste mit einem spezifischen Widerstand von 6 $\Omega$*cm erhalten. Sie zeigt keinen Cross-over bei der Strukturrelaxation, da G' sofort nach der Belastungsphase größer als G" ist. Die Strukturrelaxation erreicht nach 60 Sekunden 86,3 % des Speichermoduls bezogen auf den Plateauwert des Speichermoduls nach 20 min. Die Viskosität beträgt bei Scherrate 1 s$^{-1}$ 456.000 mPa*s und bei Scherrate 10 s$^{-1}$ 108.000 mPa*s.

Es wird eine schlechte Relaxation bei guten Viskositätswerten und guter Leitfähigkeit erhalten.

Beispiel 9:

In einem Planeten-Mischer der Fa. PC Laborsystem GmbH mit Balkenrührer, Dissolver (Scheiben-Durchmesser 52 mm) und Abstreifer wurde eine 500 g Mischung bestehend aus 1 Gew.-% CNT, 5 Gew.-% der Kieselsäure A in ViPo 20.000 bei Raumtemperatur unter Vakuum bei 1.250 rmp 3 mal 5 Minuten mit jeweils 30 Minuten Pause zwischen den Dispergierintervallen gemischt. Nach 15 Minuten Gesamtdispergierzeit (5 Minuten dispergieren, 30 Minuten Pause, 5 Minuten dispergieren, etc.) wurde eine homogene, schwarze Paste erhalten, welche einen spezifischen Widerstand von 11 $\Omega$*cm besitzt. Die Strukturrelaxation weist einen Cross-over von G">G' nach G"<G' nach 2,9 Sekunden Erholung auf und erreicht nach 60 Sekunden Relaxation 70,3 % des Speichermoduls bezogen auf den Plateauwert des Speichermoduls nach 20 Minuten. Die Viskosität beträgt bei Scherrate 1 s$^{-1}$ 383.000 mPa*s und bei Scherrate 10 s$^{-1}$ 99.600 mPa*s.

Es wird eine gute Relaxation bei guten Viskositätswerten und guter Leitfähigkeit erhalten.

Beispiel 10:

In einem Planeten-Mischer der Fa. PC Laborsystem GmbH mit Balkenrührer, Dissolver (Scheiben-Durchmesser 52 mm) und Abstreifer wurde eine 500g Mischung bestehend aus 1 w% CNT, 10 Gew.-% der Kieselsäure A in ViPo 20.000 bei Raumtemperatur unter Vakuum bei 1.250 rmp 3 mal 5 Minuten mit jeweils 30 Minuten Pause zwischen den Dispergierintervallen gemischt. Nach 15 Minuten Gesamtdispergierzeit (5 Minuten dispergieren, 30 Minuten Pause, 5 Minuten dispergieren, etc.) wurde eine homogene, schwarze Paste erhalten, welche einen spezifischen Widerstand von 12 $\Omega$*cm besitzt. Die Strukturrelaxation weist einen Cross-over von G">G' nach G"<G' nach 2,7 Sekunden Erholung auf und erreicht nach 60 Sekunden Relaxation 71,0 % des Speichermoduls bezogen auf den Plateauwert des Speichermoduls nach 20 Minuten. Die Viskosität beträgt bei Scherrate 1 s$^{-1}$ 498.000 mPa*s und bei Scherrate 10 s$^{-1}$ 133.000 mPa*s.

Es wird eine gute Relaxation bei guten Viskositätswerten und guter Leitfähigkeit erhalten.

Beispiel 11:

In einem Planeten-Mischer der Fa. PC Laborsystem GmbH mit Balkenrührer, Dissolver (Scheiben-Durchmesser 52 mm) und Abstreifer wurde eine 500 g Mischung bestehend aus 1 Gew.-% CNT, 10 Gew.-% der Kieselsäure B in ViPo 1.000 bei Raumtemperatur unter Vakuum bei 250 rmp 3 mal 5 Minuten mit jeweils 30 Minuten Pause zwischen den Dispergierintervallen gemischt. Nach 15 Minuten Gesamtdispergierzeit (5 Minuten dispergieren, 30 Minuten Pause, 5 Minuten dispergieren, etc.) wurde eine homogene, schwarze Paste erhalten, welche einen spezifischen Widerstand von 16 $\Omega$*cm besitzt. Die Strukturrelaxation zeigt nach 60 Sekunden Relaxation 75,2 % des Speichermoduls bezogen auf den Plateauwert des Speichermoduls nach 20 Minuten. Die Viskosität beträgt bei Scherrate 1 s$^{-1}$ 190.000 mPa*s und bei Scherrate 10 s$^{-1}$ 29.012,8 mPa*s.
Es wird eine gute Relaxation bei guten Viskositätswerten und guter Leitfähigkeit erhalten.

Beispiel 12:

In einem Planeten-Mischer der Fa. PC Laborsystem GmbH mit Balkenrührer, Dissolver (Scheiben-Durchmesser 52 mm) und Abstreifer wurde eine 500g Mischung bestehend aus 1 Gew.-% CNT, 10 Gew.-% der Kieselsäure B in ViPo 1.000 bei Raumtemperatur unter Vakuum bei 1.250 rmp für 10 Minuten ohne Unterbrechung eingemischt. Es wurde eine homogene, schwarze Paste erhalten, welche einen spezifischen Widerstand nach 15 Minuten reiner Dispergierzeit von 46 $\Omega$*cm besitzt. Die Strukturrelaxation zeigt nach 60 Sekunden Relaxation 77,8 % des Speichermoduls bezogen auf den Plateauwert des Speichermoduls nach 20 Minuten. Die Viskosität beträgt bei Scherrate 1 s$^{-1}$ 172.000 mPa*s und bei Scherrate 10 s$^{-1}$ 16.988,6 mPa*s.
Es wird eine gute Relaxation bei guten Viskositätswerten und akzeptabler Leitfähigkeit erhalten.

Beispiel 13 (nicht erfindungsgemäß, Dimethylsiloxy-Modifizierung als Vergleich zu CN107298859):

In einem Planeten-Mischer der Fa. PC Laborsystem GmbH mit Balkenrührer, Dissolver (Scheiben-Durchmesser 52 mm) und Abstreifer wurde eine 500 g Mischung bestehend aus 1 Gew.-% CNT, 10 Gew.-% der Kieselsäure HDK® H18 in ViPo 20.000 bei Raumtemperatur unter Vakuum bei 1.250 rmp 3 mal 5 Minuten mit jeweils 30 Minuten Pause zwischen den Dispergierintervallen gemischt. Nach 15 Minuten Gesamtdispergierzeit (5 Minuten dispergieren, 30 Minuten Pause, 5 Minuten dispergieren, etc.) wurde eine homogene, schwarze Paste erhalten, welche einen spezifischen Widerstand von 26 $\Omega$*cm besitzt. Die Strukturrelaxation erreicht nach 60 Sekunden Relaxation 76,7 % des Speichermoduls bezogen auf den Plateauwert des Speichermoduls nach 20 Minuten. Die Viskosität beträgt bei Scherrate 1 s$^{-1}$ 1.120.000 mPa*s und bei Scherrate 10 s$^{-1}$ 254.000 mPa*s.
Obwohl die Relaxation einen guten Wert aufweist, treten beim Einsatz der Dimethylsiloxy-modifizierten Kieselsäure hohe Viskositäten (> 1.000.000 mPa*s) auf, die unerwünscht sind. Zudem ist die Mischung aufgrund von Unverträglichkeiten inhomogen.

| Beispiel | Siloxan (e) | CNTs [Gew.-%] | Kieselsäure | Widerstand [$\Omega$*cm] | Relaxation nach 60 Sekunden [%] | Scherrate 1 s-1 [mPa*s) | Scherrate 10 s-1 [mPa*s] |
|---|---|---|---|---|---|---|---|
| 1 | ViPo 1.000 (38 Gew.-%) HPo 1.000 (39 Gew.-%) | 1 | A, 22 Gew.-% | 11 | 74, 9 | 529.000 | 97.200 |
| 2 | ViPo 1.000 (38 Gew.-%) HPo 1.000 (39 Gew.-%) | 0, 5 | A, 22 Gew.-% | 35 | 76,4 | 173.000 | 43.400 |
| 3 | ViPo 20.000 | 1 | A, 5 Gew.-% | 17 | 72,2 | 371.000 | 94.300 |
| 4 | ViPo 20.000 | 1 | A, 10 Gew.-% | 24 | 72, 9 | 487.000 | 125.000 |

(fortgesetzt)

| Beispiel | Siloxan (e) | CNTs [Gew.-%] | Kieselsäure | Widerstand [Ω*cm] | Relaxation nach 60 Sekunden [%] | Scherrate 1 s-1 [mPa*s] | Scherrate 10 s-1 [mPa*s] |
|---|---|---|---|---|---|---|---|
| 5 | ViPo 20.000 | 1 | A, 15 Gew.-% | 33 | 70, 1 | 598.000 | 154.000 |
| 6 | ViPo 20.000 | 1 | A, 20 Gew.-% | 61 | 65,5 | 758.000 | 205.000 |
| 7 | ViPo 20.000 | 1 | A, 10 Gew.-% | 19 | 70, 8 | 492.000 | 128.000 |
| 8 (VB) | ViPo 20.000 | 1 | ohne | 6 | 86,3 | 456.000 | 108.000 |
| 9 | ViPo 20.000 | 1 | A, 5 Gew.-% | 11 | 70,3 | 383.000 | 99.600 |
| 10 | ViPo 20.000 | 1 | A, 10 Gew.-% | 12 | 71, 0 | 498.000 | 133.000 |
| 11 | ViPo 1.000 | 1 | B, 10 Gew.-% | 16 | 75,2 | 190.000 | 29.013 |
| 12 | ViPo 1.000 | 1 | B, 10 Gew.-% | 46 | 77, 8 | 172.000 | 16.989 |
| 13 (VB) | ViPo 20.000 | 1 | HDK® H18, 10 Gew.-% | 26 | 76,7 | 1.120.000 | 254.000 |

**Patentansprüche**

1. Elektrisch leitfähige, CNT-haltige Siloxanzusammensetzung mit einer Viskosität von ≤ 1.000.000 mPa*s bei einer Scherrate von 1 s$^{-1}$, gemessen bei einer Temperatur von 25 °C, enthaltend

   a) 0,1 - 5 Gew.-% CNTs;
   b) 70 - 97,9 Gew.-% mindestens eines Siloxans, das ausgewählt wird aus Verbindungen der allgemeinen Formel (**I**)

$$(SiO_{4/2})_a(R^xSiO_{3/2})_b(R^x_2SiO_{2/2})_c(R^x_3SiO_{1/2})_d \qquad (I),$$

   worin die Reste **R$^x$** unabhängig voneinander ausgewählt werden aus der Gruppe bestehend aus (i) Wasserstoff, (ii) **-CH=CH$_2$,** (iii) unsubstituierter oder fluorierter $C_1$-$C_{20}$-Kohlenwasserstoffrest, (iv) Phenylrest und (v) **-OH,** und worin die Indices **a, b, c** und **d** die Anzahl der jeweiligen Siloxaneinheit in der Verbindung angeben und unabhängig voneinander eine ganze Zahl im Bereich von 0 bis 100.000 bedeuten, wobei gilt **a + b + c + d ≥ 2;**
   c) 1 - 20 Gew.-% mindestens einer hydrophoben Kieselsäure, die oberflächlich silyliert ist mit mindestens einer Organosiliciumverbindung, die ausgewählt ist aus Organosilanen der Formel (**IV**) und Organosilazanen der Formel (**V**)

$$R^1R^2R^3Si\text{-}Y \qquad (IV),$$

$$R^1R^2R^3Si\text{-}NH\text{-}SiR^1R^2R^3 \qquad (V),$$

   worin die Reste **R$^1$,R$^2$,R$^3$** jeweils unabhängig voneinander ausgewählt sind aus halogenierten oder unsubstituierten $C_1$-$C_{24}$-Kohlenwasserstoffresten; und
   worin der Rest **Y** ausgewählt ist aus der Gruppe bestehend aus (i) Halogenatom, (ii) **-OR$^x$**, und (iii) **-OC(=O) OR$^x$** , wobei **R$^x$** jeweils ausgewählt ist aus der Gruppe bestehend aus (i) Wasserstoff und (ii) substituierter

oder unsubstituierter $C_1$-$C_{24}$-Kohlenwasserstoffrest, wobei substituiert meint, dass mindestens eine, jedoch nicht die an Silicium gebundene, $CH_2$-Gruppe durch **- O -** ersetzt sein kann;

d) 0 - 5 Gew.-% sonstige Füllstoffe;

wobei sich die Anteile auf das Gesamtgewicht der Zusammensetzung beziehen und die Summe aller Komponenten a) bis d) 100 Gew.-% ergibt.

2.  Siloxanzusammensetzung nach Anspruch 1, **dadurch gekennzeichnet, dass** es sich bei den CNTs um MWCNTs handelt.

3.  Siloxanzusammensetzung nach Anspruch 1 oder 2, **dadurch gekennzeichnet, dass** als Siloxan eine Siloxanmischung eingesetzt wird, enthaltend

    a) mindestens ein H-Siloxan ausgewählt aus Verbindungen der allgemeinen Formel **(IIa)**

    $$(R^x_2SiO_{2/2})_c(HR^xSiO_{2/2})_{c'}(R^xSiO_{3/2})_d(HR^x_2SiO_{1/2})_{d'} \qquad \textbf{(IIa)},$$

    worin die Reste $\textbf{R}^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin die Indices **c, c', d** und **d'** die Anzahl der jeweiligen Siloxaneinheit in der Verbindung angeben, worin **c** und **c'** jeweils eine ganze Zahl im Bereich von 0 bis 100.000 bedeutet, und worin **d** und **d'** jeweils den Wert 0 oder 1 oder 2 annehmen können, mit der Maßgabe, dass die Summe aus **d** und **d'** 2 ist; und
    b) mindestens ein Vinylsiloxan ausgewählt aus Verbindungen der allgemeinen Formel (**IIb**)

    $$(R^x_2SiO_{2/2})_c(ViR^xSiO_{2/2})_{c'}(ViR^x_2SiO_{1/2})_2 \qquad \textbf{(IIb)},$$

    worin die Reste **Vi** jeweils eine Gruppe **-CH=CH$_2$** bedeuten, die an das Siliciumatom gebunden ist; und worin die Reste $\textbf{R}^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest; und worin die Indices **c** und **c'** die Anzahl der jeweiligen Siloxaneinheit in der Verbindung angeben, und c und **c'** jeweils eine ganze Zahl im Bereich von 0 bis 100.000 bedeuten.

4.  Siloxanzusammensetzung nach Anspruch 1 oder 2, **dadurch gekennzeichnet, dass** als Siloxan eine Siloxanmischung eingesetzt wird, enthaltend

    a) 1 - 10 Gew.-% mindestens eines H-Siloxans der Formel (**III**) als Vernetzer

    $$(R^x_2SiO_{2/2})_c(HR^xSiO_{2/2})_{c'}(R^x_3SiO_{1/2})_2 \qquad \textbf{(III)},$$

    worin die Reste $\textbf{R}^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin die Indices **c** und **c'** die Anzahl der jeweiligen Siloxaneinheit in der Verbindung angeben, wobei **c** eine ganze Zahl im Bereich von 0 bis 100.000 bedeutet, und wobei **c'** eine ganze Zahl im Bereich von 3 bis 100.000 bedeutet; und
    entweder
    b1) 90 - 99 Gew.-% mindestens eines Vinylsiloxans der allgemeinen Formel (I**V**)

    $$(R^x_2SiO_{2/2})_c(ViR^x_2SiO_{1/2})_2 \qquad \textbf{(IV)},$$

    worin die Reste $\textbf{R}^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin der Index **c** die Anzahl der jeweiligen Siloxaneinheit in der Verbindung angibt, und
    c = 1.001 - 100.000 bedeutet; oder
    b2) 40 - 94 Gew.-% mindestens eines Vinylsiloxans der allgemeinen Formel (**IV'**)

    $$(R^x_2SiO_{2/2})_c(ViR^x_2SiO_{1/2})_2 \qquad \textbf{(IIb')},$$

worin die Reste $R^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin der Index **c** die Anzahl der jeweiligen Siloxaneinheit in der Verbindung angibt, und c = 1 - 1.000 bedeutet; und 0 - 50 Gew.-% mindestens eines H-Siloxans der allgemeinen Formel (**IIa'**)

$$(R^x_2SiO_{2/2})_c(HR^x_2SiO_{1/2})_2 \qquad \textbf{(IIa')},$$

worin die Reste $R^x$ unabhängig voneinander ausgewählt werden aus der Gruppe bestehend aus (i) unsubstituierter oder fluorierter $C_1$-$C_{20}$-Kohlenwasserstoffrest und (ii) Phenylrest, und worin der Index **c** die Anzahl der jeweiligen Siloxaneinheit in der Verbindung angibt, und c = 1 - 100.000 bedeutet.

5.  Siloxanzusammensetzung nach einem der Ansprüche 1 bis 4, **dadurch gekennzeichnet, dass** die Reste $R^1, R^2, R^3$ in den Formeln (**IV**) und (**V**) jeweils unabhängig voneinander ausgewählt sind aus der Gruppe bestehend aus Methylrest, Ethylrest, Propylrest, 3,3,3-Trifluorpropylrest, Octylrest, Phenylrest und Vinylrest.

6.  Siloxanzusammensetzung nach einem der Ansprüche 1 bis 5, **dadurch gekennzeichnet, dass** die Organosiliciumverbindung ausgewählt ist aus der Gruppe bestehend aus Trimethylchlorsilan, Trimethylmethoxysilan, Vinyldimethylchlorsilan, Vinyldimethylmethoxysilan, Hexamethyldisilazan, Bis-Vinyldimethyldisilazan und deren Mischungen.

7.  Siloxanzusammensetzung nach einem der Ansprüche 1 bis 6, **dadurch gekennzeichnet, dass** die hydrophobe Kieselsäure folgende Eigenschaften , gemessen mit den in der Beschreibung offenbarten Methoden, aufweist

    - BET-Oberfläche im Bereich von 0,1 bis 1.000 $m^2/g$,
    - Restsilanolgehalt von < 100 %,
    - Methanolzahl von mindestens 30,
    - DBP-Zahl von $\leq$ 250 g/100 g,
    - Stampfdichte im Bereich von 20 bis 500 g/l,
    - Kohlenstoffgehalt im Bereich von $\geq$ 0,4 Gew.-%.

8.  Siloxanzusammensetzung nach Anspruch 7, **dadurch gekennzeichnet, dass** die hydrophobe Kieselsäure auf einer pyrogenen Kieselsäure basiert.

9.  Siloxanzusammensetzung nach einem der Ansprüche 1 bis 8, **dadurch gekennzeichnet, dass** der sonstige Füllstoff ausgewählt ist aus Quarz, Diatomeenerde, Metalloxiden wie Aluminiumoxiden, Zinkoxiden, Titanoxiden oder Zirkonoxiden, Metallsilikaten wie Calciumsilikat, Carbonaten wie Calciumcarbonat, Sulfaten wie Calciumsulfat, Farbpigmenten, und Rußen.

10. Verfahren zur Herstellung von elektrisch leitfähigen, CNT-haltigen Siloxanzusammensetzungen mit einer Viskosität von $\leq$ 1.000.000 mPa*s bei einer Scherrate von 1 $s^{-1}$, gemessen bei einer Temperatur von 25 °C, wobei die Komponenten a) - d) einer Siloxanzusammensetzung nach einem der Ansprüche 1 bis 9 mithilfe eines Dissolvers mit Abstreifer dispergiert werden.

11. Verfahren nach Anspruch 10, **dadurch gekennzeichnet, dass** beim Leistungsmaximum des Dissolvers dispergiert wird und mindestens eine Dispergierpause im Bereich von 1 Minute bis 60 Minuten eingelegt wird, wobei das Leistungsmaximum ermittelt wird, indem die Dissolver-Drehzahl jeweils nach 5 Minuten um 250 rpm erhöht und die Dispergierleistung gegen die Drehzahl des Dissolvers ausgewertet wird, so dass eine optimale Umlaufgeschwindigkeit des Dissolvers für das spezifische Leistungsmaximum ermittelt werden kann.

12. Verfahren nach Anspruch 11, wobei mehrere Dispergierpausen in regelmäßigen Abständen eingelegt werden.

13. Verfahren nach einem der Ansprüche 10 bis 12, wobei die Dauer der Dispergierintervalle zwischen den Dispergierpausen in einem Bereich von 1 Minute bis 60 Minuten liegt.

14. Verfahren nach einem der Ansprüche 10 bis 13, wobei der Dissolver ein Planetendissolver ist.

15. Verwendung einer Siloxanzusammensetzung nach einem der Ansprüche 4-9 als formgebendes Material beim 3D-Druck oder Siebdruck.

**16.** Elastischer, elektrisch leitfähiger Formkörper erhältlich durch ein Verfahren umfassend die folgenden Schritte:

a) Herstellung einer Siloxanzusammensetzung nach einem der Ansprüche 4-9,
b) Umsetzung dieser Siloxanzusammensetzung mit einem Hydrosilylierungskatalysator,
c) Formgebung.

**Claims**

**1.** Electrically conductive, CNT-containing siloxane composition having a viscosity of $\leq 1\,000\,000$ mPa*s at a shear rate of 1 s$^{-1}$, measured at a temperature of 25°C, containing

a) 0.1-5% by weight of CNTs;
b) 70-97.9% by weight of at least one siloxane selected from compounds of general formula (I)

$$(SiI_{4/2})_a(R^xSiO_{3/2})_b(R^x2SiO_{2/2})_c(R^x3SiO_{1/2})_d \qquad (I),$$

wherein the radicals R$^x$ are independently of one another selected from the group consisting of (i) hydrogen, (ii) -CH=CH$_2$, (iii) unsubstituted or fluorinated C$_1$-C$_{20}$-hydrocarbon radical, (iv) phenyl radical and (v) -OH and wherein the indices a, b, c and d indicate the number of the respective siloxane unit in the compound and independently of one another represent an integer in the range from 0 to 100 000, wherein a + b + c + d $\geq$ 2;
c) 1-20% by weight of at least one hydrophobic silica which is surface-silylated with at least one organosilicon compound selected from organosilanes of formula (IV) and organosilazanes of formula (V)

$$R^1R^2R^3Si\text{-}Y \qquad (IV),$$

$$R^1R^2R^3Si\text{-}NH\text{-}SiR^1R^2R^3 \qquad (V),$$

wherein the radicals R$^1$,R$^2$,R$^3$ are each independently of one another selected from halogenated or unsubstituted C$_1$-C$_{24}$-hydrocarbon radicals; and
wherein the radical Y is selected from the group consisting of (i) halogen atom, (ii) -OR$^X$ and (iii) - OC (=O) OR$^X$,
wherein R$^x$ is in each case selected from the group consisting of (i) hydrogen and (ii) substituted or unsubstituted C$_1$-C$_{24}$-hydrocarbon radical, wherein substituted is to be understood as meaning that at least one CH$_2$ group, but not the one bonded to silicon, may be replaced by -O-;

d) 0-5% by weight of other fillers;
wherein the proportions are based on the total weight of the composition and the components a) to d) sum to 100% by weight.

**2.** Siloxane composition according to Claim 1, **characterized in that** the CNTs are MWCNTs.

**3.** Siloxane composition according to Claim 1 or 2, **characterized in that** the siloxane employed is a siloxane mixture containing

a) at least one H-siloxane selected from compounds of general formula (IIa)

$$(R^x_2SiO_{2/2})_c(HR^xSiO_{2/2})_{c'}(R^xSiO_{3/2})_d(HR^x_2SiO_{1/2})_{d'} \qquad (IIa),$$

wherein the radicals R$^x$ are independently of one another selected from the group consisting of (i) unsubstituted or fluorinated C$_1$-C$_{20}$-hydrocarbon radical and (ii) phenyl radical and wherein the indices c, c', d and d' indicate the number of the respective siloxane unit in the compound, wherein c and c' each represent an integer in the range from 0 to 100 000 and wherein d and d' may each assume the value 0 or 1 or 2, with the proviso that the sum of d and d' is 2; and

b) at least one vinylsiloxane selected from compounds of general formula (IIb)

$$(R^x_2SiO_{2/2})_c(ViR^xSiO_{2/2})_{c'}(ViR^x_2SiO_{1/2})_2 \qquad (IIb),$$

wherein the radicals Vi each represent a -CH=CH$_2$ group bonded to the silicon atom; and wherein the radicals R$^x$ are independently of one another selected from the group consisting of (i) unsubstituted or fluorinated C$_1$-C$_{20}$-hydrocarbon radical and (ii) phenyl radical; and wherein the indices c and c' indicate the number of the respective siloxane unit in the compound, and c and c' each represent an integer in the range from 0 to 100 000.

4. Siloxane composition according to Claim 1 or 2, **characterized in that** the siloxane employed is a siloxane mixture containing

a) 1-10% by weight of at least one H-siloxane of formula (III) as a crosslinker

$$(R^x_2SiO_{2/2})_c(HR^xSiO_{2/2})_{c'}(R^x_3SiO_{1/2})_2 \qquad (III),$$

wherein the radicals R$^x$ are independently of one another selected from the group consisting of (i) unsubstituted or fluorinated C$_1$-C$_{20}$-hydrocarbon radical and (ii) phenyl radical, and wherein the indices c and c' indicate the number of the respective siloxane unit in the compound, wherein c is an integer in the range from 0 to 100 000 and wherein c' is an integer in the range from 3 to 100 000; and either

b1) 90-99% by weight of at least one vinylsiloxane of general formula (IV)

$$(R^x_2SiO_{2/2})_c(ViR^x_2SiO_{1/2})_2 \qquad (IV),$$

wherein the radicals R$^x$ are independently of one another selected from the group consisting of (i) unsubstituted or fluorinated C$_1$-C$_{20}$-hydrocarbon radical and (ii) phenyl radical and wherein the index c indicates the number of the respective siloxane unit in the compound and c = 1001-100 000; or

b2) 40-94% by weight of at least one vinylsiloxane of general formula (IV')

$$(R^x_2SiO_{2/2})_c(ViR^x_2SiO_{1/2})_2 \qquad (IIb'),$$

wherein the radicals R$^x$ are independently of one another selected from the group consisting of (i) unsubstituted or fluorinated C$_1$-C$_{20}$-hydrocarbon radical and (ii) phenyl radical and wherein the index c indicates the number of the respective siloxane unit in the compound and c = 1-1000; and 0-50% by weight of at least one H-siloxane of general formula (IIa')

$$(R^x_2SiO_{2/2})_c(HR^x_2SiO_{1/2})_2 \qquad (IIa'),$$

wherein the radicals R$^x$ are independently of one another selected from the group consisting of (i) unsubstituted or fluorinated C$_1$-C$_{20}$-hydrocarbon radical and (ii) phenyl radical and wherein the index c indicates the number of the respective siloxane unit in the compound and c = 1-100 000.

5. Siloxane composition according to any of Claims 1 to 4, **characterized in that** the radicals R$^1$,R$^2$,R$^3$ in formulae (IV) and (V) are each independently of one another selected from the group consisting of methyl radical, ethyl radical, propyl radical, 3,3,3-trifluoropropyl radical, octyl radical, phenyl radical and vinyl radical.

6. Siloxane composition according to any of Claims 1 to 5, **characterized in that** the organosilicon compound is selected from the group consisting of trimethylchlorosilane, trimethylmethoxysilane, vinyldimethylchlorosilane, vinyldimethylmethoxysilane, hexamethyldisilazane, bis-vinyldimethyldisilazane and mixtures thereof.

**7.** Siloxane composition according to any of Claims 1 to 6, **characterized in that** the hydrophobic silica has the following properties measured with the methods disclosed in the description

- BET surface area in the range from 0.1 to 1000 m$^2$/g,
- residual silanol content of < 100%,
- methanol number of at least 30,
- DBP number of $\leq$ 250 g/100 g,
- tamped density in the range from 20 to 500 g/l,
- carbon content in the range of $\geq$ 0.4% by weight.

**8.** Siloxane composition according to Claim 7, **characterized in that** the hydrophobic silica is based on a pyrogenic silica.

**9.** Siloxane composition according to any of Claims 1 to 8, **characterized in that** the other filler is selected from quartz, diatomaceous earth, metal oxides such as aluminium oxides, zinc oxides, titanium oxides or zirconium oxides, metal silicates such as calcium silicate, carbonates such as calcium carbonate, sulfates such as calcium sulfate, colour pigments and carbon blacks.

**10.** Process for producing electrically conductive, CNT-containing siloxane compositions having a viscosity of $\leq$ 1 000 000 mPa*s at a shear rate of 1 s$^{-1}$, measured at a temperature of 25°C, wherein the components a)-d) of a siloxane composition according to any of Claims 1 to 9 are dispersed using a dissolver having a scraper.

**11.** Process according to Claim 10, **characterized in that** the dispersing is carried out at the power maximum of the dissolver and at least one dispersing pause in the range from 1 minute to 60 minutes is taken, wherein the power maximum is determined by increasing the dissolver speed by 250 rpm every 5 minutes and evaluating the dispersing power against the speed of the dissolver, thus allowing determination of an optimal rotational speed of the dissolver for the specific power maximum.

**12.** Process according to Claim 11, wherein two or more dispersing pauses are taken at regular intervals.

**13.** Process according to any of Claims 10 to 12, wherein the duration of the dispersing intervals between the dispersing pauses is in a range from 1 minute to 60 minutes.

**14.** Process according to any of Claims 10 to 13, wherein the dissolver is a planetary dissolver.

**15.** Use of a siloxane composition according to any of Claims 4-9 as a formative material in 3D printing or screen printing.

**16.** Elastic, electrically conductive shaped article obtainable by a process comprising the steps of:

a) producing a siloxane composition according to any of Claims 4-9,
b) reacting this siloxane composition with a hydrosilylation catalyst,
c) forming.


**Revendications**

**1.** Composition de siloxane contenant des NTC, conductrice de l'électricité, ayant une viscosité $\leq$ 1 000 000 mPa*s à un taux de cisaillement de 1 s$^{-1}$, mesuré à une température de 25 °C, contenant

a) 0,1 - 5 % en poids de NTC ;
b) 70 - 97,9 % en poids d'au moins un siloxane choisi parmi les composés de formule générale (I)

$$(SiO_{4/2})_a(R^xSiO_{3/2})_b(R^x{}_2SiO_{2/2})_c(R^x{}_3SiO_{1/2})\,d \qquad (I),$$

dans laquelle les radicaux R$^x$ sont choisis indépendamment les uns des autres dans le groupe constitué par (i) un atome d'hydrogène, (ii) -CH=CH$_2$, (iii) un radical hydrocarboné en C$_1$-C$_{20}$ fluoré ou non substitué, (iv) un radical phényle et (v) -OH, et dans laquelle les indices a, b, c et d indiquent le nombre de l'unité siloxane respective dans le composé et représentent indépendamment les uns des autres un nombre entier dans la plage de 0 à 100 000, la somme a + b + c + d étant ≥ 2 ;

c) 1 - 20 % en poids d'au moins une silice hydrophobe, qui est silylée en surface par au moins un composé organosilicié qui est choisi parmi les organosilanes de formule (IV) et les organosilazanes de formule (V) R$^1$R$^2$R$^3$Si-Y (IV),

$$R^1R^2R^3Si\text{-}NH\text{-}SiR^1R^2R^3 \qquad (V),$$

formules dans lesquelles les radicaux R$^1$,R$^2$,R$^3$ sont choisis chacun indépendamment parmi les radicaux hydrocarbonés en C$_1$-C$_{24}$ halogénés ou non substitués ; et où le radical Y est choisi dans le groupe constitué par (i) un atome d'halogène, (ii) -OR$^X$, et (iii) -OC(=O)OR$^X$, R$^x$ étant chaque fois choisi dans le groupe constitué par (i) un atome d'hydrogène et (ii) un groupe hydrocarboné en C$_1$-C$_{24}$ substitué ou non substitué, substitué signifiant qu'au moins un groupe CH$_2$, hormis celui lié au silicium, peut être remplacé par -O- ;

d) 0 - 5 % en poids d'autres charges ;

les proportions se rapportant au poids total de la composition et la somme de tous les composants a) à d) étant égale à 100 % en poids.

2. Composition de siloxane selon la revendication 1, **caractérisée en ce que** pour ce qui est des NTC il s'agit de NTCPM.

3. Composition de siloxane selon la revendication 1 ou 2, **caractérisée en ce qu'**est utilisé en tant que siloxane un mélange de siloxanes contenant

a) au moins un H-siloxane choisi parmi les composés de formule générale (IIa)

$$(R^x{}_2SiO_{2/2})_c(HR^xSiO_{2/2})_{c'}(R^xSiO_{3/2})_d(HR^x{}_2SiO_{1/2})_{d'} \qquad (IIa),$$

dans laquelle les radicaux R$^x$ sont choisis indépendamment les uns des autres dans le groupe constitué par (i) un radical hydrocarboné en C$_1$-C$_{20}$ fluoré ou non substitué et (ii) un radical phényle, et dans laquelle les indices c, c', d et d' indiquent le nombre de l'unité siloxane respective dans le composé, dans laquelle c et c' représentent chacun un nombre entier dans la plage de 0 à 100 000, et dans laquelle d et d' peuvent chacun prendre la valeur 0 ou 1 ou 2, étant entendu que la somme de d et d' est égale à 2 ; et

b) au moins un vinylsiloxane choisi parmi les composés de formule générale (IIb)

$$(R^x{}_2SiO_{2/2})_c(ViR^xSiO_{2/2})_{c'}(ViR^x{}_2SiO_{1/2})_2 \qquad (IIb),$$

dans laquelle les radicaux Vi représentent chacun un groupe -CH=CH$_2$ qui est lié à l'atome de silicium ; et dans laquelle les radicaux R$^x$ sont choisis indépendamment les uns des autres dans le groupe constitué par (i) un radical hydrocarboné en C$_1$-C$_{20}$ fluoré ou non substitué et (ii) un radical phényle ; et dans laquelle les indices c et c' indiquent le nombre de l'unité siloxane respective dans le composé, et c et c' représentent chacun un nombre entier dans la plage de 0 à 100 000.

4. Composition de siloxane selon la revendication 1 ou 2, **caractérisée en ce qu'**est utilisé en tant que siloxane un mélange de siloxanes contenant

a) 1 - 10 % en poids d'au moins un H-siloxane de formule (III) en tant qu'agent de réticulation

$$(R^x{}_2SiO_{2/2})_c(HR^xSiO_{2/2})_{c'}(R^x{}_3SiO_{1/2})_2 \qquad (III),$$

dans laquelle les radicaux R$^x$ sont choisis indépendamment les uns des autres dans le groupe constitué par (i) un radical hydrocarboné en C$_1$-C$_{20}$ fluoré ou non substitué et (ii) un radical phényle, et dans laquelle les indices c et c' indiquent le nombre de l'unité siloxane respective dans le composé, c représentant un nombre entier dans la plage de 0 à 100 000, et c' représentant un nombre entier dans la plage de 3 à 100 000 ; et

soit

b1) 90 - 99 % en poids d'au moins un vinylsiloxane de formule générale (IV)

$$(R^x_2SiO_{2/2})_c(ViR^x_2SiO_{1/2})_2 \qquad \text{(IV)},$$

dans laquelle les radicaux $R^x$ sont choisis indépendamment les uns des autres dans le groupe constitué par (i) un radical hydrocarboné en $C_1$-$C_{20}$ fluoré ou non substitué et (ii) un radical phényle, et dans laquelle l'indice c indique le nombre de l'unité siloxane respective dans le composé, et c représente 1 001 - 100 000 ; soit

b2) 40 - 94 % en poids d'au moins un vinylsiloxane de formule générale (IV')

$$(R^x_2SiO_{2/2})_c(ViR^x_2SiO_{1/2})_2 \qquad \text{(IIb')},$$

dans laquelle les radicaux $R^x$ sont choisis indépendamment les uns des autres dans le groupe constitué par (i) un radical hydrocarboné en $C_1$-$C_{20}$ fluoré ou non substitué et (ii) un radical phényle, et dans laquelle l'indice c indique le nombre de l'unité siloxane respective dans le composé, et c représente 1 - 1 000 ; et 0 - 50 % en poids d'au moins un H-siloxane de formule générale (IIa')

$$(R^x_2SiO_{2/2})_c(HR^x_2SiO_{1/2})_2 \qquad \text{(IIa')},$$

dans laquelle les radicaux $R^x$ sont choisis indépendamment les uns des autres dans le groupe constitué par (i) un radical hydrocarboné en $C_1$-$C_{20}$ fluoré ou non substitué et (ii) un radical phényle, et dans laquelle l'indice c indique le nombre de l'unité siloxane respective dans le composé, et c représente 1 - 100 000.

5. Composition de siloxane selon l'une quelconque des revendications 1 à 4, **caractérisée en ce que** les radicaux $R^1$, $R^2$, $R^3$ dans les formules (IV) et (V) sont choisis chacun indépendamment les uns des autres dans le groupe constitué par un radical méthyle, un radical éthyle, un radical propyle, un radical 3,3,3-trifluoropropyle, un radical octyle, un radical phényle et un radical vinyle.

6. Composition de siloxane selon l'une quelconque des revendications 1 à 5, **caractérisée en ce que** le composé organosilicié est choisi dans le groupe constitué par le triméthylchlorosilane, le triméthylméthoxysilane, le vinyldiméthylchlorosilane, le vinyldiméthylméthoxysilane, l'hexaméthyldisilazane, le bis-vinyldiméthyldisilazane et des mélanges de ceux-ci.

7. Composition de siloxane selon l'une quelconque des revendications 1 à 6, **caractérisée en ce que** la silice hydrophobe présente les propriétés suivantes, mesurées par les méthodes révélées dans la description

- une surface BET dans la plage de 0,1 à 1 000 m$^2$/g,
- une teneur en silanol résiduel de < 100 %,
- un indice de méthanol d'au moins 30,
- un indice de DBP de $\leq$ 250 g/100 g,
- une densité après tassement dans la plage de 20 à 500 g/l,
- une teneur en carbone dans la plage de $\geq$ 0,4 % en poids.

8. Composition de siloxane selon la revendication 7, **caractérisée en ce que** la silice hydrophobe est à base d'une silice pyrogénée.

9. Composition de siloxane selon l'une quelconque des revendications 1 à 8, **caractérisée en ce que** l'autre charge est choisie parmi le quartz, la terre de diatomées, les oxydes métalliques tels que les oxydes d'aluminium, oxydes de zinc, oxydes de titane ou oxydes de zirconium, les silicates métalliques tels que le silicate de calcium, les carbonates tels que le carbonate de calcium, les sulfates tels que le sulfate de calcium, les pigments colorés, et les noirs de carbone.

10. Procédé pour la préparation de compositions de siloxane conductrices de l'électricité, contenant des NTC, ayant une viscosité de $\leq 1\,000\,000$ mPa*s à un taux de cisaillement de 1 s$^{-1}$, mesuré à une température de 25 °C, dans lequel les composants a) - d) d'une composition de siloxanes selon l'une quelconque des revendications 1 à 9 sont dispersés à l'aide d'un dissolveur muni d'un système de raclage.

11. Procédé selon la revendication 10, **caractérisé en ce que** la dispersion s'effectue au maximum de puissance du dissolveur et avec insertion d'au moins une pause de dispersion dans la plage de 1 minute à 60 minutes, le maximum de puissance étant déterminé en augmentant la vitesse de rotation du dissolveur de 250 tours/min chaque fois après 5 minutes et en évaluant la puissance de dispersion par rapport à la vitesse de rotation du dissolveur, de sorte qu'une vitesse de rotation optimale du dissolveur peut être déterminée pour le maximum de puissance spécifique.

12. Procédé selon la revendication 11, dans lequel plusieurs pauses de dispersion sont insérées à intervalles réguliers.

13. Procédé selon l'une quelconque des revendications 10 à 12, dans lequel la durée des intervalles de dispersion entre les pauses de dispersion se situe dans une plage de 1 minute à 60 minutes.

14. Procédé selon l'une quelconque des revendications 10 à 13, dans lequel le dissolveur est un dissolveur planétaire.

15. Utilisation d'une composition de siloxane selon l'une quelconque des revendications 4-9 en tant que matériau de mise en forme dans l'impression 3D ou la sérigraphie.

16. Corps moulé élastique, conducteur de l'électricité, pouvant être obtenu par un procédé comprenant les étapes suivantes :

   a) préparation d'une composition de siloxane selon l'une quelconque des revendications 4-9,
   b) mise en réaction de cette composition de siloxane avec un catalyseur d'hydrosilylation,
   c) mise en forme.

**EP 4 025 427 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 107298859
- CN 106046739 A
- CN 107722631 A
- CN 109082124 A
- CN 108688252 A
- CN 108504106 A
- CN 107383880 A
- WO 2017143961 A1
- EP 1433749 A1

**In der Beschreibung aufgeführte Nicht-Patentliteratur**

- **C.-L. WU ; H.-C. LIN ; C.-H. HUANG ; M.-C. YIP ; W. FANG**. *MRS Online Proceedings Library*, 2007, vol. 1056
- **S. S. HASSOUNEH ; L. YU ; A. L. SKOV ; A. E. DAUGAARD**. *Journal of Applied Polymer Science*, 2017, vol. 134
- **A. BEHRENS ; K. FOREMNY ; T. DOLL**. *physica status solidi (a)*, 2018, vol. 215, 1700873
- **C. X. LIU ; J. W. CHOI**. *IEEE Transactions on Nanotechnology*, 2010, vol. 9, 590-595
- **G.W. SEARS**. *Anal. Chem.*, 1956, vol. 28, 1981
- **G. W. SEARS et al.** *Analytical Chemistry*, 1956, vol. 28, 1981

26